(19) Europäisches Patentamt
European Patent Office
Office européen des brevets

(11) **EP 1 830 333 A1**

(12) **EUROPEAN PATENT APPLICATION**

(43) Date of publication:
**05.09.2007 Bulletin 2007/36**

(51) Int Cl.:
***G09B 23/00*** (2006.01)

(21) Application number: **07001599.5**

(22) Date of filing: **25.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.01.2006 JP 2006018789**
**30.03.2006 JP 2006095454**

(71) Applicant: **SYSMEX CORPORATION**
**Kobe-shi,**
**Hyogo 651-0073 (JP)**

(72) Inventors:
• **Kouchi, Yasuhiro**
**Chuo-ku**
**Kobe-shi**
**Hyogo 651-0073 (JP)**

• **Saitou, Takeo**
**Chuo-ku**
**Kobe-shi**
**Hyogo 651-0073 (JP)**

• **Seike, Masayoshi**
**Chuo-ku**
**Kobe-shi**
**Hyogo 651-0073 (JP)**

• **Takahata, Takayuki**
**Chuo-ku**
**Kobe-shi**
**Hyogo 651-0073 (JP)**

(74) Representative: **HOFFMANN EITLE**
**Patent- und Rechtsanwälte**
**Arabellastrasse 4**
**81925 München (DE)**

(54) **Medical simulation system, computer system and computer program product**

(57) A medical simulation system has a replacing section for replacing at least a part of a plurality of biological function state values represented by the biological model and a simulating section for generating post-replacement simulated biological response on the basis of the biological model which reflects the replaced value.

**FIG. 1**

EP 1 830 333 A1

**Description**

FIELD OF THE INVENTION

The present invention relates to a medical simulation system used for assisting the therapy for diseases such as diabetes, a computer system for giving an examination targeted for a living body, for example, an examination about diabetes, and a computer program product thereof.

BACKGROUND

For treatment of disease, generally, a variety of tests are carried out on a patient in addition to interview made by a physician. Under existing circumstances, a physician selects therapeutic strategy based on test results and clinical presentation based on his own experiences.

Therefore, if information which is useful for examination is provided by a computer, examination by a physician would be effected more appropriately. As a system that supports examination, there are known systems that predict blood glucose level as described in US Patent Nos. 6,421,633 and 5,971,922. These systems support examination by predicting change in blood glucose level of a patient and providing a physician with a predicted blood glucose level.

For selecting an appropriate therapeutic method, it is desired for a physician to properly grasp the factors constituting causes of various conditions of disease. Properly grasping factors and conducting therapy for improving the factors would realize more appropriate therapy.

For example, in the case of diabetes, "blood glucose level" is used as an index representing the degree of the disease. However, the "blood glucose level" is merely a result, and it is important to accurately grasp the causative pathogenic conditions such as insufficient insulin secretion, peripheral insulin resistance, hepatic glucose incorporation deterioration, and increase in hepatic glucose release resulting therefrom based on the clinical representation as described above.

When the physician gives an appropriate treatment, it is desired for the physician to grasp how much therapeutic effects can be expected from the treatment for a certain factor.

In the case of diseases such as diabetes, a plurality of factors may be often combined with each other, for example, both of insufficient insulin secretion and peripheral insulin resistance appear. When a plurality of factors appear at the same time in this manner, it may be impossible to treat all pathogenic conditions as it is difficult to combine drugs. In such case, the physician needs to judge which factor should be selected for treatment to achieve an effective result.

On the other hand, causes of diabetes include insulin resistance. Insulin is a hormone which lowers the blood glucose level. In healthy subjects with low insulin resistance (good insulin sensitivity), sufficient insulin in the periphery can prevent high blood glucose level. However, since insulin resistance lowers glucose assimilation of insulin, even when there is sufficient insulin in the periphery, the blood glucose level becomes high. Thus, for proper treatment of diabetes, it is important to accurately grasp insulin resistance.

Many methods have been proposed as a method for assessing insulin resistance. For example, assessment based on fasting plasma insulin concentration and assessment based on HOMA-R (homeostasis model assessment) are proposed. However, both the methods are used as a simple assessment method since assessment of insulin resistance disadvantageously becomes difficult when the test subject has insufficient insulin secretion.

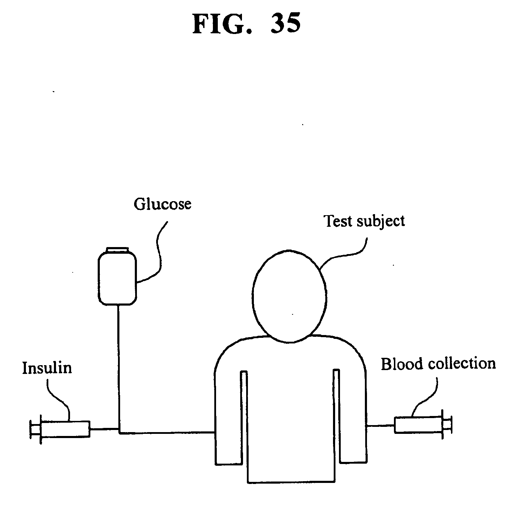

Glucose clamp is known as an accurate method for assessing insulin resistance. As shown in Fig. 35, glucose clamp called as euglycemic-hyperinsulinemic clamp is a method of infusing a fixed quantity of insulin of about 1.5 [mU/kg/min] into a vein after infusion of insulin of about 3 [mU/kg/min] for initial predetermined time (0 to 10 minutes) from outside of a living body and adjusting glucose infusion rate from outside of a living body so that the blood glucose level of the living body may be kept to be a target value (for example, 100mg/dl).

When the blood glucose level is kept constant, since glyconeogenesis in liver is suppressed, most of glucose administered from the outside is taken in the periphery (mostly muscles). That is, the glucose infusion rate (GIR) can be regarded as glucose absorption rate in the periphery. Thus, the glucose infusion rate represents insulin resistance.

However, in the actual circumstances, glucose clamp imposes a large burden on the test subject and has hardly been executed. That is, as shown in Fig. 35, glucose and insulin are administered to the test subject by intravenous drip infusion and blood for examining the blood glucose level is taken many times every few minutes. The above-mentioned assessment based on fasting plasma insulin concentration and HOMA-R which require single drawing of blood impose a small burden on the test subject, while glucose clamp which requires intravenous drip and multiple drawings of blood imposes a large burden on the test subject. For this reason, in actual treatment of diabetes, it is difficult to consider insulin resistance.

SUMMARY

The scope of the present invention is defined solely by the appended claims, and is not affected to any degree by the statements within this summary.

The first aspect of the present invention relates to a medical simulation system comprising:

biological response input means for receiving input of biological response information representing biological response;

biological model generating means for generating a biological model which simulates biological functions by generating a plurality of biological function state values for generating simulated response which simulates the biological response;

replacing means for replacing at least a part of a plurality of the biological function state values shown by the biological model; and

simulating means for generating post-replacement simulated biological response on the basis of the biological model which reflects the replaced value.

The second aspect of the present invention relates to a computer program product comprising:

a computer readable medium, and

software instructions, on the computer readable medium, for enabling the computer to perform predetermined operations comprising:

receiving input of biological response information representing biological response;

generating a biological model which simulates biological functions by generating a plurality of biological function state values for generating simulated response which simulates the biological response;

replacing at least a part of a plurality of the biological function state values shown by the biological model; and

generating post-replacement simulated biological response on the basis of the biological model which reflects the replaced value.

The third aspect of the present invention relates to a computer system adapted to perform a simulated test of a living body comprising:

a processor, and

a memory, under control of the processor, including software instructions adapted to enable the computer system to perform operations comprising:

receiving input of results of a first test to a living body;

generating a biological model for performing a second test which is different from the first test on the basis of the input results of the first test; and

performing computer simulation of the second test using the biological model.

The fourth aspect of the present invention relates to a computer program product for enabling a computer to perform a simulated test of a living body comprising:

a computer readable medium, and

software instructions, on the computer readable medium, for enabling the computer to perform predetermined operations comprising:

receiving input of results of a first test to a living body;

generating a biological model for performing a second test which is different from the first test on the basis of the input results of the first test; and

performing computer simulation of the second test using the biological model.

BRIEF DESCRIPTION OF THE DRAWINGS

Fig. 1 is a system construction view of a medical simulation system;

Fig. 2 is a block diagram showing a hardware construction of a server;

Fig. 3 is a block diagram showing overall construction of a biological model;

Fig. 4 is a block diagram showing a construction of pancreas model of the biological model;

Fig. 5 is a block diagram showing a construction of a hepatic model of the biological model;

Fig. 6 is a block diagram showing a construction of insulin kinetics model of the biological model;

Fig. 7 is a block diagram showing a construction of a peripheral tissue model of the biological model;

Fig. 8 is a flow chart showing system overall processing;

Fig. 9 is a schematic view showing an example of a displayed image of measured OGTT time-series data;

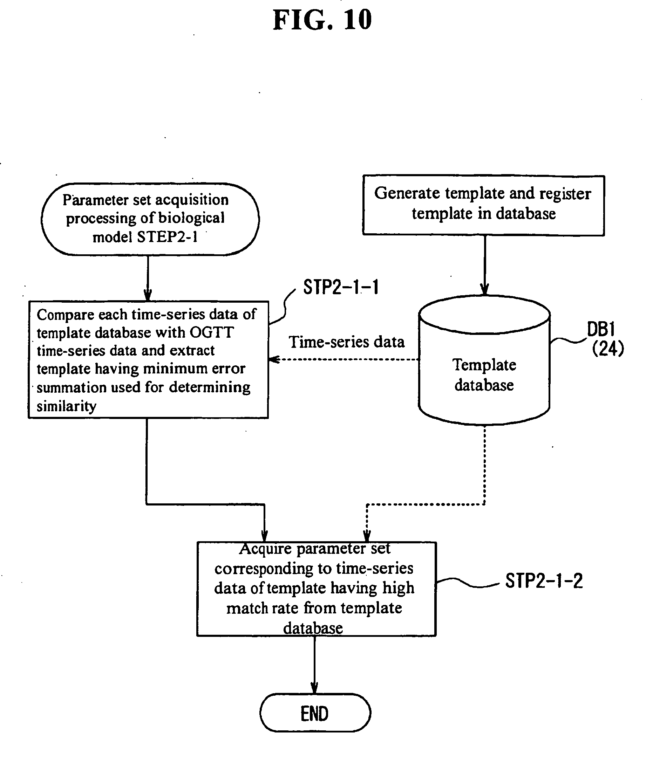

Fig. 10 is a flow chart showing parameter set acquisition processing of the biological model;

Fig. 11 is a view showing a template database;

Fig. 12(a) is a graph showing template data of blood glucose level;

Fig. 12(b) is a graph showing template data of insulin concentration;

Fig. 13 is a schematic view showing an example of a displayed image of input OGTT data and pre-replacement simulated biological response;

Fig. 14 is a schematic view showing an example of a displayed image of a pre-replacement parameter set;

Fig. 15 is a schematic view showing an example of a displayed image of biological response before and after replacement in the case where BETA replacement is carried out;

Fig. 16 is a schematic view showing an example of a displayed image of biological response before and after replacement in the case where Kp replacement is carried out;

Fig. 17 is a schematic view showing an example of a circle graph of a cause occupation ratio;

Fig. 18 is a schematic view showing another example of a displayed image of measured OGTT time-series data;

Fig. 19 is a schematic view showing another example of a displayed image of input OGTT data and pre-replacement simulated biological response;

Fig. 20 is a schematic view showing another example of a displayed image of the pre-replacement parameter set;

Fig. 21 is a schematic view showing another example of a displayed image of biological response before and after replacement in the case where BETA replacement is carried out;

Fig. 22 is a schematic view showing another example of a displayed image of biological response before and after replacement in the case where Kp replacement is carried out;

Fig. 23 is a schematic view showing another example of a circle graph of a cause occupation ratio;

Fig. 24 is a block diagram showing structure of a liver model of a biological model in accordance with a second embodiment;

Fig. 25 is a block diagram showing structure of a peripheral tissue model of a biological model in accordance with the second embodiment;

Fig. 26 is a flow chart showing processing procedure of simulated glucose clamp in accordance with the second embodiment;

Fig. 27 is a flow chart showing parameter set generation processing procedure;

Fig. 28(a) is a graph showing measured OGTT time-series data of blood glucose level;

Fig. 28(b) is a graph showing measured OGTT time-series data of blood insulin concentration;

Fig. 29 is a configuration view of the template database;

Fig. 30(a) is a graph showing template data of the blood glucose level;

Fig. 30(b) is a graph showing template data of the insulin concentration;

Fig. 31(a) is a graph showing error summation of blood glucose level of time-series data to a template T1;

Fig. 31(b) is a graph showing error summation of insulin concentration of time-series data to the template T1;

Fig. 32 is a graph showing simulated glucose clamp processing results (change in blood glucose level) for each GIR;

Fig. 33 is a graph showing simulated glucose clamp processing results (change in blood glucose level) in a GIR estimated value;

Fig. 34 is a graph showing simulated glucose clamp processing results (change in insulin) in a GIR estimated value;

Fig. 35 is an explanation view of glucose clamp;

Fig. 36(a) is a graph showing OGTT simulation results of change in blood glucose level of a test subject A;

Fig. 36(b) is a graph showing OGTT simulation results of change in insulin value of the test subject A;

Fig. 37(a) is a graph showing simulated glucose clamp results of change in blood glucose level of the test subject A;

Fig. 37(b) is a graph showing simulated glucose clamp results of change in insulin value of the test subject A;

Fig. 38(a) is a graph showing OGTT simulation results of change in blood glucose level of a test subject B;

Fig. 38(b) is a graph showing OGTT simulation results of change in insulin value of the test subject B;

Fig. 39(a) is a graph showing simulated glucose clamp results of change in blood glucose level of the test subject B;

Fig. 39(b) is a graph showing simulated glucose clamp results of change in insulin value of the test subject B;

Fig. 40(a) is a graph showing OGTT simulation results of change in blood glucose level of a test subject C;

Fig. 40(b) is a graph showing OGTT simulation results of change in insulin value of the test subject C;

Fig. 41(a) is a graph showing simulated glucose clamp results of change in blood glucose level of the test subject C;
Fig. 41(b) is a graph showing simulated glucose clamp results of change in insulin value of the test subject C.

DETAILED DESCRIPTION OF THE EMBODIMENT

Embodiments of a medical simulation system is described hereinafter with reference to drawings.

(Embodiment 1)

[System overall construction]

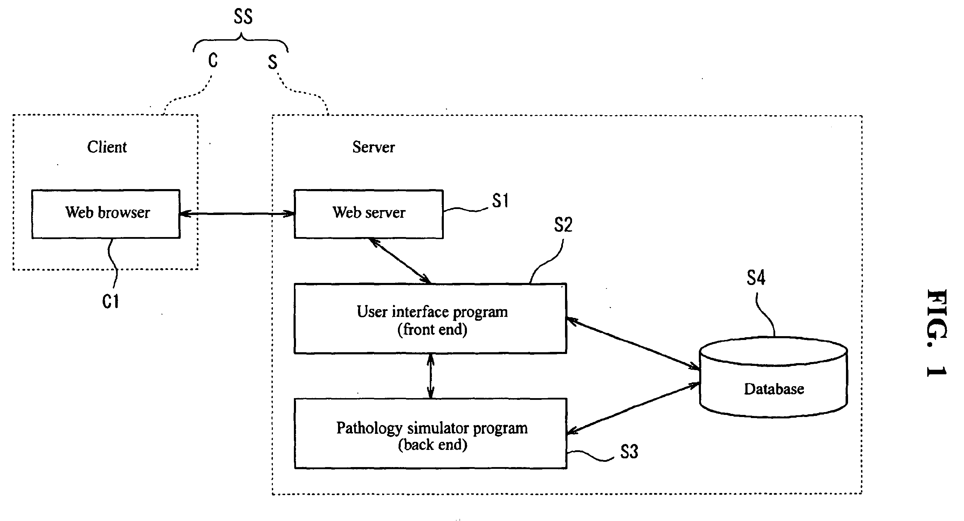

Fig. 1 is a system construction view when a medical simulation system SS is configured as a server client system.
The system SS includes a server S having a function of a Web server S1, and a client terminal C connected to the server S via network. The client terminal C is used by a user such as physician. The client terminal C has a Web browser C1. The Web browser C1 functions as a user interface of the system SS, and a user is allowed to make input or required operation on the Web browser C1. Further, to the Web browser C1, a screen generated in the server S and transmitted is outputted.
The server S has a function of the Web server S1 that receives access from the Web browser C1 of the client terminal C. Further, in the server S, a user interface program S2 for generating a user interface screen displayed in the Web browser C1 is mounted in a computer-executable manner. The user interface program S2 has a function of generating a screen to be displayed in the Web browser C1 and transmitting it to the client terminal C, and receiving information inputted on the Web browser C1 from the client terminal C. In the client terminal C, Java (TM) applet or the like program for realizing the function of generating a part or the whole of the screen to be displayed in the Web browser C1 may be downloaded from the server S, and a part or the whole of the screen is generated and displayed in the screen of the Web browser C1.
Further, in the server S, a pathogenic condition simulator program S3 is mounted in a computer-executable manner. The pathogenic condition simulator program S3 is provided for conducting simulation concerning disease based on the biological model as will be described later. Further, the server S is provided with a database S4 having various data such as test results of a patient. Data inputted to the system SS, data generated in the system, and other data is stored in this database S4.
As described above, the server S has a function of Web server, an interface (screen) generating function, and a function of pathologic condition simulator. In Fig. 1, a server client system which is connected via network is shown as a construction example of medical simulation system, however, the present system may be constructed in a single computer.

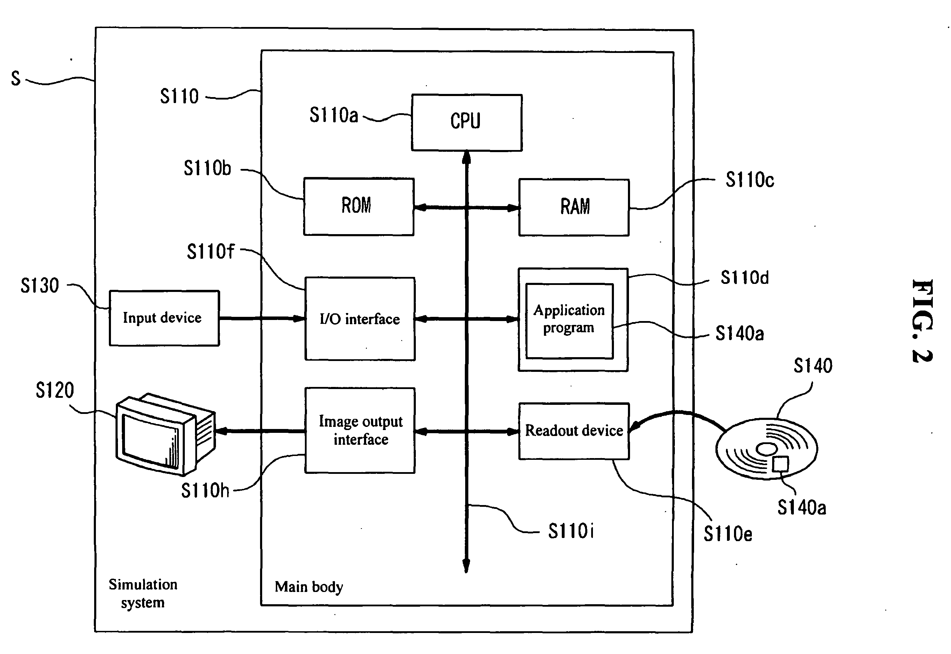

Fig. 2 is a block diagram showing hardware construction of the server S. The server S is composed of a computer primarily comprising a main body S110, a display S120, and an input device S130. The main body S110 comprises a CPU S110a, a ROM S110b, a RAM S110c, a hard disk S110d, a readout device S110e, an input/output interface S110f, and an image output interface S110h. The CPU S110a, the ROM S110b, the RAM S110c, the hard disk S110d, the readout device S110e, the input/output interface S110f, and the image output interface S110h are data-communicably connected by a bus S110i.
The CPU S110a is capable of executing a computer program recorded in the ROM S110b and a computer program loaded in the RAM S110c. And the CPU S110a executes an application program 140a such as the above programs S2, S3 to realize each function block as described later, thereby the computer functions as the system SS.
The ROM S110b comprises mask ROM, PROM, EPROM, EEPROM, etc. and is recoded with computer programs executed by the CPU S110a and data used for the programs.
The RAM S110c comprises SRAM, DRAM, etc. The RAM S110c is used to read out computer programs recorded in the ROM S110b and the hard disk S110d. And the RAM S110c is used as a work area of the CPU S110a when these computer programs are executed.
The hard disk S110d is installed with an operating system, an application program, etc., various computer programs to be executed by the CPU S110a, and data used for executing the computer programs. The programs S2, S3 are also installed in this hard disk S110d.
The readout device S110e which comprises a flexible disk drive, a CD-ROM drive or DVD-ROM drive is capable of reading out a computer program or data recorded in a portable recording media S140. And the portable recording media S140 stores the application program S140a (S2, S3) to function as a system of the present invention. The computer reads out the application program S140a related to the present invention from the portable recording media S140 and is capable of installing the application program S140a in the hard disk S110d.
In addition to that said application program S140a is provided by the portable recording media S140, said application program S140a may be provided through an electric communication line (wired or wireless) from outside devices which are communicably connected to the computer via said electric communication line. For example, said application program S140a is stored in a hard disk in an application program providing server computer on the Internet to which the computer accesses and said application program S140a may be downloaded and installed in the hard disk S110d.

The hard disk S110d is installed with an operating system which provides a graphical user interface environment, e.g. Windows (Registered trademark) manufactured by US Microsoft Corp. In the explanation hereinafter, the application program S140a (S2, S3) related to this embodiment shall operate on said operating system.

The input/output interface S110f comprises a serial interface, e.g. USB, IEEE1394, RS-232C, etc.; a parallel interface, e.g. SCSI, IDE, IEEE1284, etc.; and an analog interface, e.g. D/A converter, A/D converter, etc. The input/output interface S110f is connected to the input device 130 comprising a keyboard and a mouse and users can input data into the computer using the input data device 130.

The image output interface S110h is connected to the display S120 comprising LCD, CRT or the like so that picture signals corresponding to image data provided from the CPU S110a are output to the display S120. The display S120 displays a picture (screen) based on input picture signals.

The hardware construction of the client terminal C is substantially equal to the hardware construction of the server S.

[Biological model in simulation system]

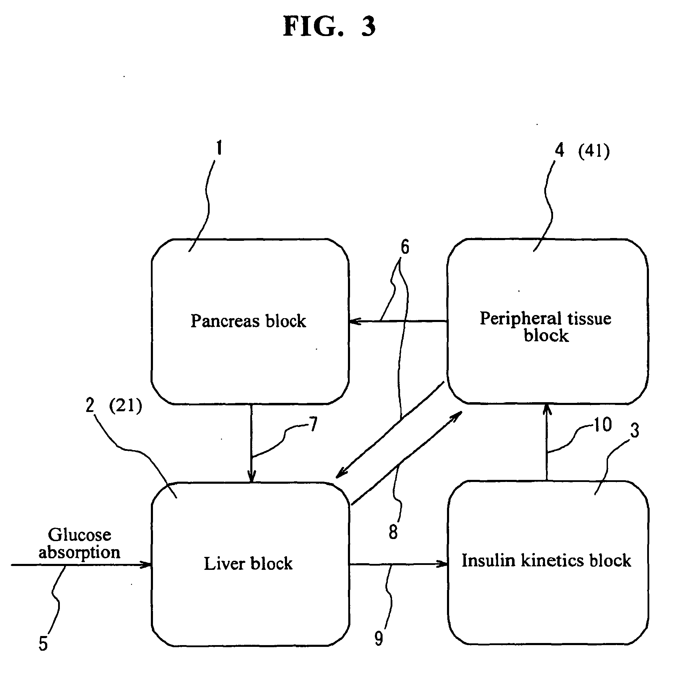

Fig. 3 is a block diagram showing the overall construction of one example of a biological model used in the pathogenic condition simulator program S3 of the system SS according to the present invention. The biological model, in particular, simulates biological organs associated with diabetes, and comprises a pancreas block 1, a hepatic block 2, an insulin kinetics block 3, and a peripheral tissue block 4.

Each block 1, 2, 3, 4 has input and output. As to the pancreas block 1, a blood glucose level 6 is set as input and an insulin secretion rate 7 is set as output to other blocks. As to the hepatic block 2, a glucose absorption 5 from digestive tract, a blood glucose level 6 and an insulin secretion rate 7 are set as input and net glucose release 8 and post liver insulin 9 are set as output to other blocks. As to the insulin kinetics block 3, post liver insulin 9 is set as input and peripheral tissue insulin concentration 10 is set as output to other blocks. As to the peripheral tissue block 4, a net glucose release 8, and insulin concentration 10 in the peripheral tissue are set as input and a blood glucose level 6 is set as output to other blocks.

Glucose absorption 5 is data provided from outside of the biological model. In the present embodiment, as to data concerning glucose absorption, predetermined values are stored in advance depending on the kind of the inputted test data to be inputted (biological response). Further, the function blocks 1 to 4 are each realized by the CPU in the server 2 executing the simulator program.

Next, the above-mentioned blocks each are described in detail. FGB expresses a fasting blood glucose level (FGB = BG (0)), and Ws expresses an assumed weight. DVg and DVi respectively express a distribution capacity volume against glucose and a distribution capacity volume against insulin.

[Pancreas block of biological model]

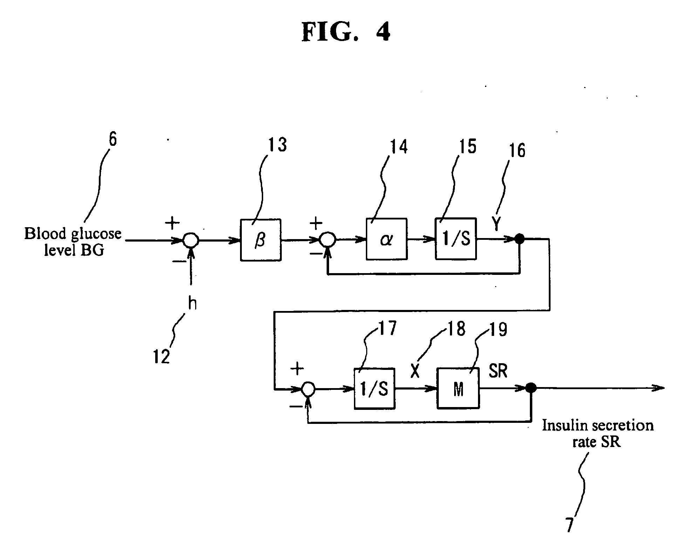

Relationship between input and output of the pancreas block 1 may be expressed using the following differential equation (1). A block diagram as in Fig. 4 equivalent to the differential equation (1) may be also used.

Differential equation (1):

$$dY/dt = -\alpha\{Y(t) - \beta(BG(t) - h)\} \quad (BG(t) > h)$$

$$= -\alpha Y(t) \quad (BG(t) <= h)$$

$$dX/dt = -M \cdot X(t) + Y(t)$$

$$SR(t) = M \cdot X(t)$$

Variables:

BG(t): blood glucose level

X(t): total amount of insulin capable of secretion from pancreas

Y(t): supply rate of insulin newly supplied for glucose stimulation

SR(t): pancreas insulin secretion rate

Parameters:

h: threshold of glucose concentration capable of stimulating insulin supply

$\alpha$: following performance to glucose stimulation

$\beta$: sensitivity to glucose stimulation

M: secretion rate per unit concentration

where a blood glucose level 6 which is input to the pancreas block in Fig. 2 corresponds to BG(t). The insulin secretion rate 7 which is output of the pancreas block in Fig. 2 corresponds to SR(t).

In a block diagram in Fig. 3, numeral 6 indicates a blood glucose level BG (t); 7, pancreas insulin secretion rate from pancreas SR (t); 12, glucose concentration threshold stimulating insulin supply h; 13, glucose stimulation sensitivity $\beta$; 14, glucose stimulation following capability $\alpha$; 15, integral element; 16, supply rate of newly supplied insulin to glucose stimulation Y(t); 17, integral element; 18, total amount of insulin capable of secretion from pancreas X(t); 19, secretion rate per unit concentration M.

[Hepatic block of biological model]

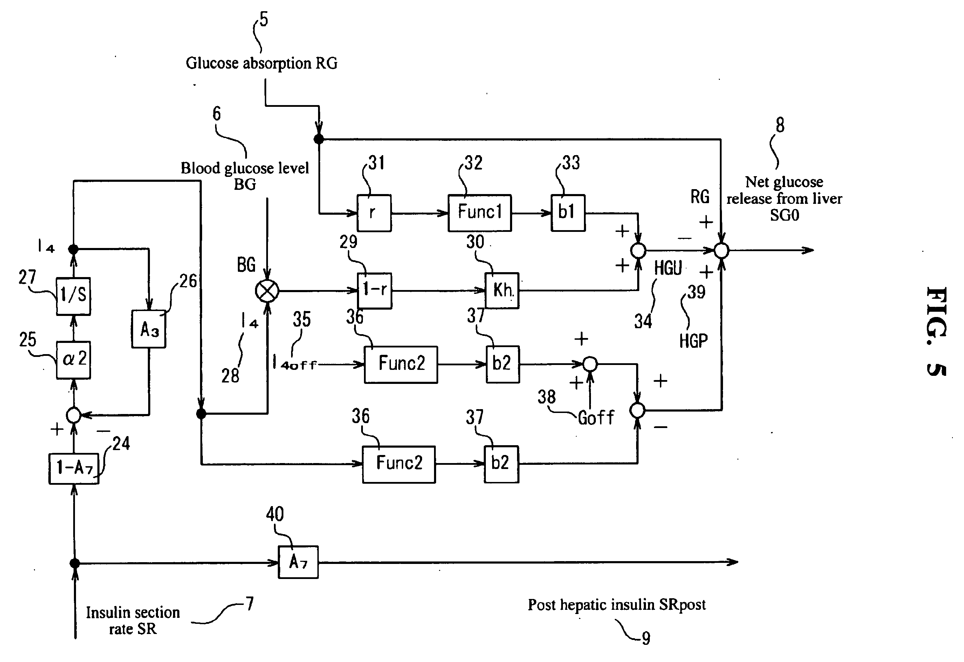

Relationship between input and output of the hepatic block 2 may be described using the following differential equation (2). A block diagram as in Fig. 5 equivalent to the differential equation (2) may be also used.

```
Differential equation (2):

    dI₄(t) / dt  = α2 {-A₃I₄(t) + (1-A₇)•SR(t)}

    Goff (FGB)  = f1            (FGB < f3)

                = f1 + f2•(FGB - f3)    (FGB >=f3)

    Funcl (FGB) = f4 - f5•(FGB - f6)

    Func2 (FGB) = f7 / FGB

    b1(I₄(t))   = f8{1 + f9•I4(t)}

    HGU(t)      = r•Funcl(FBG)•b1(I₄(T))•RG(t) +

                  (1-r)•Kh•BG(t)•I4(t)      (HGU(t)>= 0

    HGP(t)      = I₄off•Func2(FBG)•b2+Goff(FBG)

                  -I₄(t)•Func2(FBG)•b2  (HGP(t)>= 0)

    SGO(t)      = RG(t) + HGP(t) - HGU (t)

    SRpost(t)   = A₇SR(t)
```

Variables:

BG(t): blood glucose level
SR(t): pancreas insulin secretion rate
SRpost(t): post hepatic insulin
RG(t): glucose absorption from digestive tract
HGP(t): hapatic glucose release
HGU (t): hepatic glucose uptake
SGO (t): net glucose from liver
$I_4$(t): hepatic insulin concentration

Parameter:

Kh: hepatic glucose uptake rate per unit insulin and unit glucose
$A_7$: insulin uptake rate in liver
Goff: glucose release rate to basal metabolism
b2: adjustment term for hepatic glucose release suppression rate
r: insulin-dependent hepatic glucose uptake distribution rate
$\alpha$2: transmission efficiency to insulin stimulation
$I_{4off}$: insulin concentration threshold of hepatic glucose release suppression

Function:

Goff (FBG): glucose release rate to basal metabolism
Funcl(FBG): hepatic glucose uptake rate to stimulation of glucose from digestive tract
Func2 (FBG): hepatic glucose release-suppression rate to insulin stimulation
f1 to f9: constants used to express the above-mentioned three elements
b1($I_4$(t)): adjustment item for hepatic glucose incorporation rate
where the glucose absorption 5 from digestive tract which is input to the hepatic block in Fig. 3 corresponds to RG (t), the blood glucose level 6 to BG(t) and the insulin secretion rate 7 to SR(t). The net glucose release 8 which is output corresponds to SGO(t) and the post liver insulin 9 to SRpost(t).

In a block diagram in Fig. 5, numeral 5 expresses glucose absorption from digestive tract RG(t); 6, blood glucose level BG(t); 7, pancreas insulin secretion rate SR(t); 8, net glucose from liver SGO(t);9, post liver insulin SRpost(t); 24, liver insulin passage rate (1 - A7); 25, followability to insulin stimulation $\alpha$2; 26, post liver insulin distribution rate A3; 27, integral element; 28, hepatic insulin concentration $I_4$(t); 9, insulin-dependant hepatic glucose incorporation distribution rate (1-r); 30, liver insulin-dependent glucose incorporation rate per unit insulin and unit glucose Kh; 31, insulin -independent hepatic glucose incorporation rate r; 32, hepatic glucose incorporation rate to glucose stimulation from digestive tract Funcl(FGB); 33, adjustment item for hepatic incorporation rate b1 ($I_4$(t)); 34, hepatic glucose incorporation HGU(t); 35, insulin concentration threshold of hepatic glucose release inhibition $I_{4off}$; 36, hepatic release-inhibition rate to insulin stimulation Func2 (FGB); 37, adjustment items hepatic glucose release-inhibition rate b2; 38, glucose release rate to basal metabolism; 39, hepatic glucose release HGP(t); 40, insulin incorporation rate in liver $A_7$.

[Insulin kinetics block of biological model]

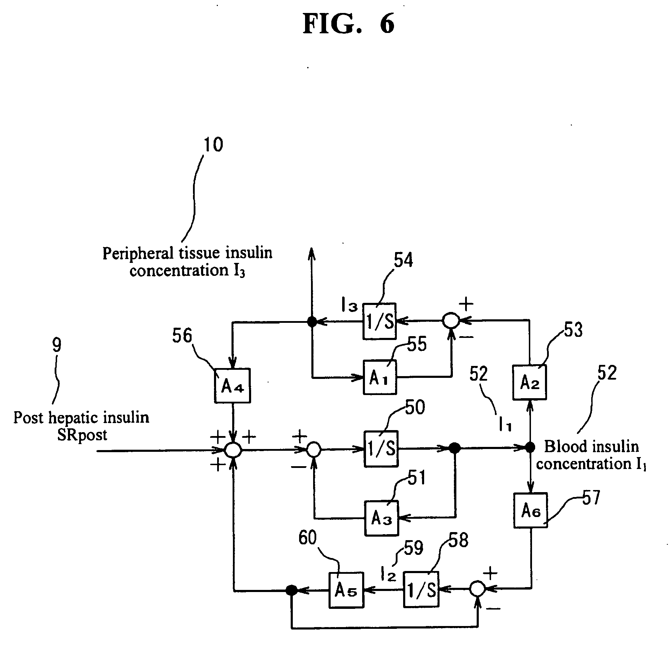

Relationship between input and output of the insulin kinetics secretion may be described using the following differential equation (3). A block diagram as in Fig. 6 equivalent to the differential equation (3) may be also used.

Differential equation (3):

$$dI_1(t) / dt = - A_3I_1(t) + A_5I_2(t) + A_4I_3(t) +$$

$$SRpost(t)$$

$$dI_2(t) / dt = A_6I_1(t) - A_5I_2(t)$$

$$dI_3(t) / dt = A_2I_1(t) - A_1I_3(t)$$

Variables:

SRpost(t): post hepatic insulin
$I_1(t)$: blood insulin concentration
$I_2(t)$: insulin concentration in insulin-independent tissues
$I_3(t)$: insulin concentration in peripheral tissues

Parameters:

$A_1$: insulin disappearance rate in peripheral tissues
$A_2$: insulin distribution rate to peripheral tissues
$A_3$: post hepatic insulin distribution rate
$A_4$: post peripheral tissue insulin flow out rate
$A_5$: insulin disappearance rate in insulin-independent tissues
$A_6$: insulin distribution rate to insulin-independent tissues

where the post liver insulin 9 which is input to the insulin kinetics block in Fig. 3 corresponds to SRpost(t). The peripheral tissue insulin concentration 10 which is output corresponds to $I_3(t)$.

In a block diagram in Fig. 6, numeral 9 expresses post liver insulin SRpost (t); 10, insulin concentration in peripheral tissue $I_3(t)$; 50, integral element; 51, post liver insulin distribution rate $A_3$; 52, blood insulin concentration $I_1(t)$; 53, insulin distribution rate to peripheral tissues $A_2$; 54, integral element; 55, insulin disappearance rate in peripheral tissue A1; 56, post peripheral tissue insulin discharge rate $A_4$; 57, insulin distribution rate to insulin-independent tissue A6; 58, integral element; 59, insulin concentration in insulin-independent tissue $I_2(t)$ ; 60, insulin disappearance rate in insulin-independent tissue $A_5$.

[Peripheral tissue block of biological model]

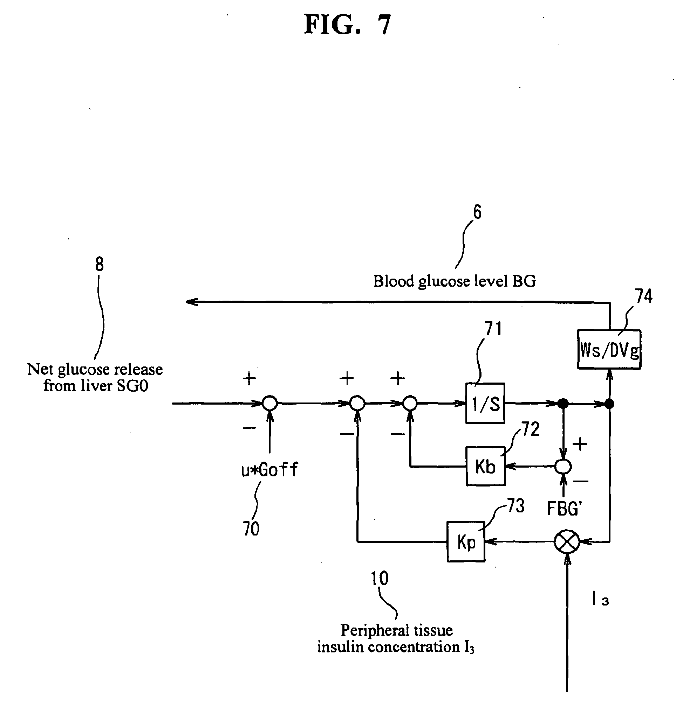

Relationship between input and output of the peripheral tissue block 4 may be described using the following differential equation (4). A block diagram as in Fig. 7 equivalent to the differential equation (4) may be also used.

Differential equation (4):

$$dBG' / dt = SGO(t) - u*Goff(FGB)$$

$$- Kb(BG'(t) - FBG') - Kp \cdot I_3(t) \cdot BG'(t)$$

Variables:

BG'(t): blood glucose level (BG[mg/d1], BG'[mg/kg])
SGO(t): net glucose from liver
I3(t): insulin concentration in peripheral tissues
FBG': fasting blood glucose (provided that FBG'=BG(0))

Parameters:

Kb: insulin-independent glucose consumption rate in peripheral tissues
Kp: insulin-dependent glucose consumption rate in peripheral tissues per unit insulin and per unit glucose
u: ratio of insulin-independent glucose consumption to basal metabolism in glucose release rate to basal metabolism

Functions:

Goff(FGB): glucose release rate to basal metabolism f1 to f3: constant used to express Goff

where the peripheral tissue insulin concentration 10 which is input to the peripheral tissue block in Fig. 3 corresponds to $I_3(t)$, the net glucose 8 from liver corresponds to SGO(t). The blood glucose level 6 which is output corresponds to BG(t).
In a block diagram in Fig. 7, numeral 6 expresses blood glucose level BG(t); 8, net glucose from liver SGO(t); 10, insulin concentration in peripheral tissues $I_3(t)$; 70, insulin-independent glucose consumption rate to basal metabolism u*Goff(FGB); 71, integral element; 72, insulin-independent glucose consumption rate in peripheral tissues Kb; 73, insulin-dependent glucose consumption rate in peripheral tissues per unit insulin and per unit glucose Kp; 74, unit conversion constant Ws/DVg.
As shown in Fig. 3, since inputs and outputs are mutually connected between the blocks constituting the present system, by giving glucose absorption 5 from digestive tract, it is possible to calculate and simulate time courses of blood glucose level and insulin concentration based on the mathematical formula.
With regard to calculation of the differential equations of the present system, e.g. E-Cell (software disclosed by Keio University) and MatLab (manufactured by The MathWorks, Inc.) may be employed. Or other calculation system may be employed.

[Overall processing procedure]

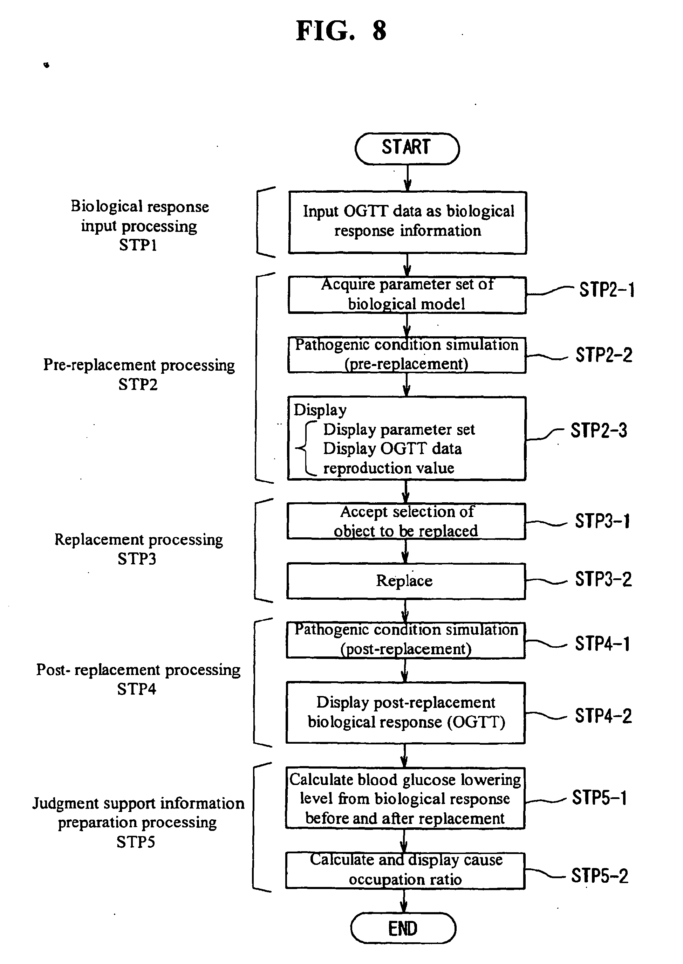

Fig. 8 shows processing procedure in which the present system SS generates and displays judgment support information for supporting the physician's judgment of therapeutic effects The processing in Fig. 8 includes biological response input processing STP1, pre-replacement processing STP2, replacement processing STP3, post-replacement processing STP4 and judgment support information preparation processing STP5. The processing in Fig. 8 is achieved by executing the user interface program S2 or the pathogenic condition simulator program S3 by a computer.

[Biological response input processing STP1]

First, OGTT (Oral Glucose Tolerance Test) time-series data as biological response information (measured clinical data) is input. The OGTT time-series data shows results of OGTT as a test targeted for a patient to be simulated by using the biological model (a predetermined glucose solution is taken by mouth and time variations of the blood glucose level and blood insulin concentration are measured) and the present system receives input of actual biological response (actual test value) from the client terminal C. Here, as the OGTT time-series data, blood glucose level data and insulin concentration data are input. The biological response information input to the client terminal C is transmitted to the server S and the server S accepts the information. As described above, the server S has a function as a biological response input section. Biological response input may be performed by transmitting the biological response information from a computer outside of the system to the system SS.

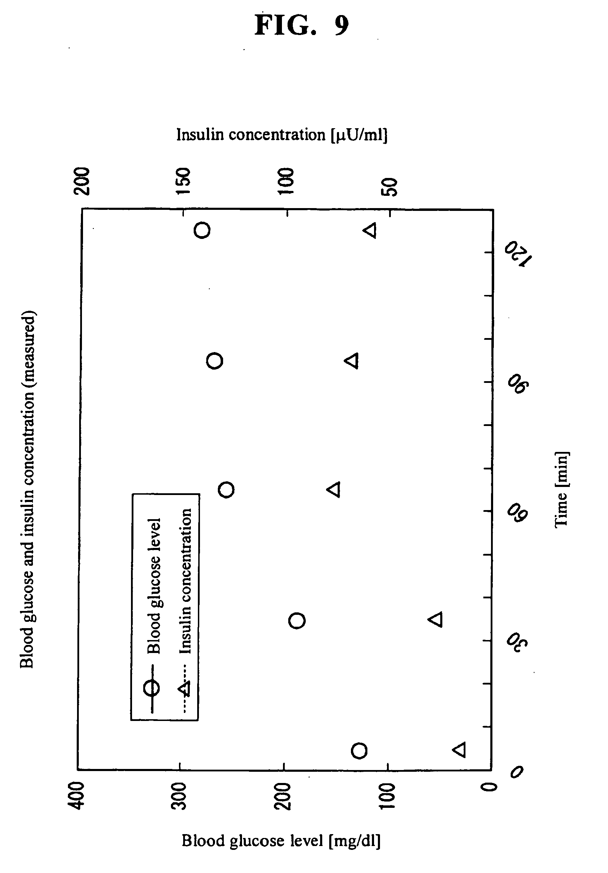

Fig. 9 shows an example in which measured values (time variation) of the input blood glucose level and insulin concentration are displayed as an image in a graph. The image in Fig. 9 can be displayed on the client terminal C (if necessary, the server S). The blood glucose level data shown in Fig. 9 is measured data corresponding to time course of the blood glucose level BG(t) as one of output items in the biological model shown in Fig. 3 to Fig. 7. The insulin concentration variation data in Fig. 9 is measured data corresponding to time variation of the blood insulin concentration $I_1(t)$ as one of output items in the biological model shown in Fig. 3 to Fig. 7.

[Pre-replacement processing STP2]

Subsequently, as pre-replacement processing, parameter set acquisition processing of the biological model STP2-1, pathogenic conditions simulation processing STP2-2 and display processing STP2-3 are carried out.

[Parameter set acquisition processing (biological function state value generation processing) of biological model STP2-1]

To simulate a biological organ of each patient by using the above-mentioned biological model shown in Fig. 3 to Fig. 7, the biological model according to characteristics of each patient needs to be generated. Specifically, it is necessary to determine parameters of the biological model and an initial value of a variable for each patient, apply the determined parameters and the initial value to the biological model and generate the biological model adapted for each patient (hereinafter, unless specifically defined, the initial value of the variable is included in the parameters to be generated).

For this reason, the server S of the present system SS has a function of obtaining an internal parameter set (hereinafter simply referred as "parameter set") as a set of internal parameters of the biological model and generating the biological model to which the obtained parameter set is applied. This function is achieved by the pathogenic condition simulator program S3. By giving the parameter set generated by a biological model generating section to the biological model, a biological model calculating section can simulate the function of the biological organ and output simulated response simulating actual biological response (test results).

Hereinafter, the parameter set acquisition processing of generating a set of parameters (biological function state values) for forming the biological model simulating the biological organ of the patient on the basis of the test results (biological response) of an actual patient (living body) will be described in detail.

[Template matching: Step S1-2]

Next, the present system SS matches the input OGTT time-series data to the template of template database DB1. The template database DB1 is one of database included in the database 24 of the server S.

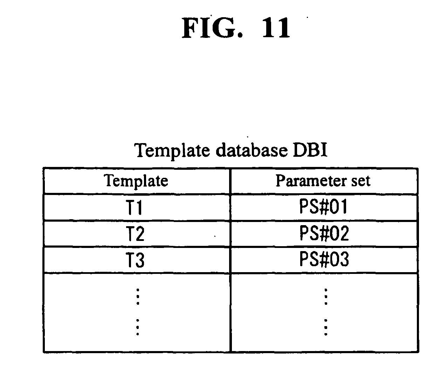

As shown in Fig. 11, the template database DB1 is preliminarily stored with a plurality sets of data, which are biological model reference output values T1, T2, ... as a template and parameter set PS#01, PS#02 ... correspondent to the reference output value to generate the reference output value. To make up a pair of reference output value and parameter set, a random reference output value is assigned by an appropriate parameter set, or on the contrary, a biological model output at the time when a random parameter set is selected is obtained by the biological simulation.

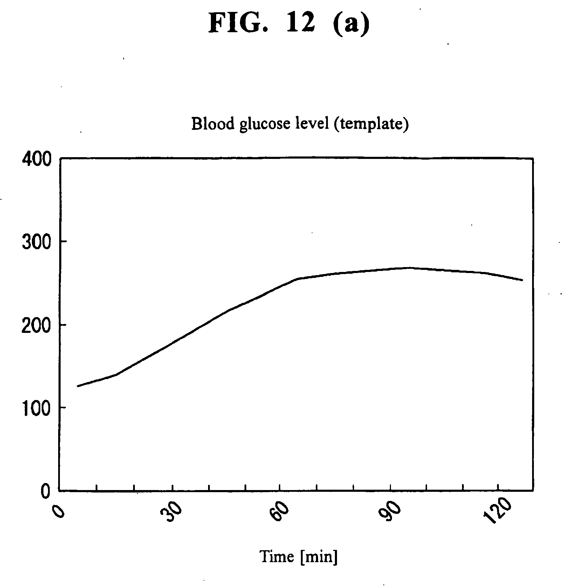

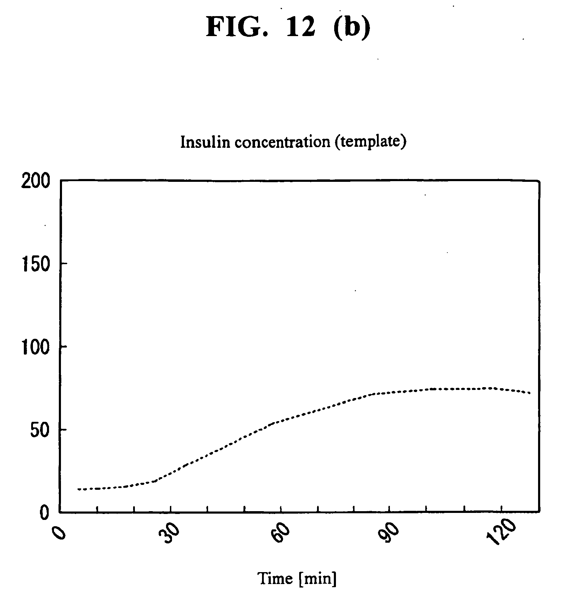

Fig. 12(a) and Fig. 12(b) show examples of the template (reference output value) T1. Fig. 12(a) is a blood glucose change data as a template, which is reference time-series data corresponding to time course of the blood glucose level BG(t), one of output items in the biological model shown in Figs. 3 to 7. Fig. 12(b) is blood insulin concentration change data as a template, which is reference time-series data corresponding to time course of blood insulin concentration $I_1(t)$, one of output items in the biological model shown in Figs. 3 to 7.

The system SS computes similarity between each reference time-series datum of the above-mentioned template database DB1 and OGTT time-series data. The similarity is obtained by obtaining error summation. The error summation is obtained by the following formula.

$$\text{Error summation} = \alpha\Sigma|BG(0)-BGt(0)|+\beta\Sigma|PI(0)-PIt(0)|$$

$$+\alpha\Sigma|BG(1)-BGt(1)|+\beta\Sigma|PI(1)-PIt(1)|$$

$$+\alpha\Sigma|BG(2)-BGt(2)|+\beta\Sigma|PI(2)-PIt(2)|$$

$$+...$$

$$=\alpha\{\Sigma|BG(t)-BGt(t)|\}+\beta\{\Sigma|PI(t)-PIt(t)|\}$$

where

BG: input data blood glucose level [mg/dl]
PI: input data blood insulin concentration [$\mu$U/ml]
BGt: template blood glucose level[mg/dl]
PIt: template blood insulin concentration [$\mu$U/ml]
t: time[minute]

Here, $\alpha$ and $\beta$ are coefficient used for normalization

$$\alpha=1/\text{Average} \{\Sigma BG(t)\}$$

$$\beta=1/\text{Average} \{\Sigma PI(t)\}$$

The average of the formula shows average level to all templates stored in the template database DB1.
As the error summation is smaller, a template is more approximate to the OGTT time-series data. The parameter set of the template which is approximate to the OGTT time-series data represents the state of a biological function well. The CPU S110a computes the error summation of each template in the template database DB1 and determines a template having the minimum error summation (similarity), that is, a template which is most approximate to the OGTT time-series data most.

[Parameter set acquisition STP2-1-2]

Furthermore, the system SS acquires a parameter set corresponding to the template determined in the STP2-2-1 from the template database DB1. Hereinafter, the acquired parameter set is referred to as a "pre-replacement parameter set" and each parameter forming the pre-replacement parameter set is referred to as a "pre-replacement parameter".
A method for generating the parameter set (biological model) is not limited to the above-mentioned template matching and for example, the parameter set may be generated by a genetic algorithm. That is, the genetic algorithm that an initial population of the parameter sets is randomly generated and the parameter sets (individuals) included in the initial population is subjected to selection, crossing and mutation processing to generate a new sub-population can be used. Among the parameter sets according to the genetic algorithm, the parameter set outputting simulated response which is approximate to the input biological response (test results).
As described above, as long as the biological model generating section can generate the biological model capable of outputting simulated response simulating the input biological response, the generating method is not specifically limited.

[Pre-replacement simulation processing STP2-2]

The system SS gives the pre-replacement parameter set obtained by the parameter set acquisition processing STP2-1 to the biological model and makes a calculation based on the biological model to generate simulated biological response information (graph showing time course of the blood glucose level and the insulin concentration) which simulate the input OGTT time-series data. This function is achieved by the pathogenic condition simulator program S3.

Hereinafter, simulated response generated by the simulation (pre-replacement) is referred to as "pre-replacement simulated biological response". The pre-replacement simulated biological response simulates the OGTT time-series data.

[Display processing STP2-3]

[Display of pre-replacement biological response (input biological response and pre-replacement simulated biological response)]

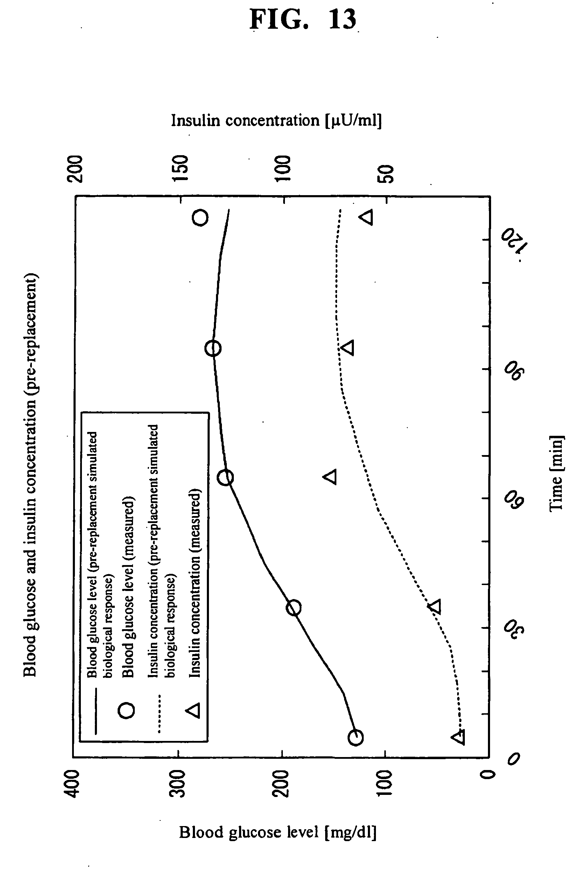

Fig. 13 shows a displayed image which is generated on the basis of a processing result of STP2-2 according to the user interface program S2 of the server S, transmitted from the server S2 to the client C and displayed on the Web browser C1 of the client C. The image in Fig. 13 displays both the input OGTT time-series data and pre-replacement simulated biological response. By outputting both the OGTT time-series data and the pre-replacement simulated biological response, the user can confirm whether or not the pre-replacement simulated biological response reproduces the OGTT time-series data (input biological response) well. When the OGTT time-series data is not specifically discriminated from the pre-replacement simulated biological response which reproduces the OGTT time-series data, both are collectively referred as "pre-replacement biological response".

[Display of biological function state values (parameter set)]

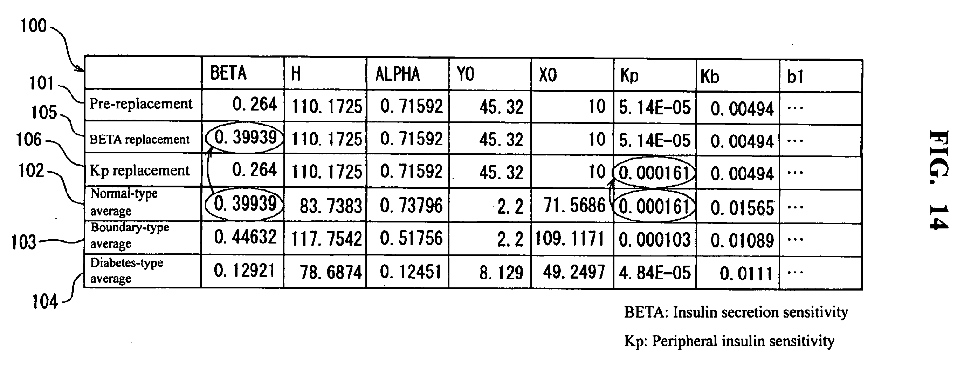

Fig. 14 shows a displayed image which is generated according to the user interface program S2 of the server S on the basis of a processing result of STP2-1, transmitted from the server S2 to the client C and displayed on the Web browser C1 of the client C. The image in Fig. 14 displays the pre-replacement parameter set as state values of the biological function represented by the biological model. More specifically, the image in Fig. 14 includes a parameter name (BETA, H, ...) display section 100, a pre-replacement parameter set display section 101, a normal-type average display section 102 showing average parameter values of a healthy subject, a borderline-type average display section 103 showing average parameter values of a patient of borderline-type diabetes and a diabetes-type average display section 104 showing average parameter values of a patient of diabetes in the biological model.

As shown in Fig. 14, by displaying values of normal-type average, borderline-type average and diabetes-type average as values to be compared which are useful in grasping pathogenic conditions together with the pre-replacement parameter set, the user (physician) can easily grasp the pathogenic conditions of the patient. For example, a parameter "BETA" in Fig. 14 corresponds to "β: sensitivity to glucose stimulation (also called as "insulin secretion sensitivity")" in the pancreas block 1 of the biological model. Since a value of "BETA" of the pre-replacement parameter set is away from a value of "BETA" of the normal-type average value, the physician can easily judge that the insulin secretion sensitivity as a pathogenic condition is deteriorated.

A parameter "Kp" in Fig. 14 corresponds to "Kp: insulin-dependent glucose consumption rate in peripheral tissues per unit insulin and per unit glucose (also called as peripheral insulin sensitivity)" in the peripheral tissue block 4 of the biological model. Since a value of "Kp" of the pre-replacement parameter set is away from a value of "Kp" of the normal-type average value, the physician can easily judge that the peripheral insulin sensitivity as a pathogenic condition is deteriorated.

As described above, the display in Fig. 14 provides information for supporting the physician to grasp pathogenic conditions of the patient. In Fig. 14, only some parameters among parameters forming the parameter set are displayed. However, the other parameter may be displayed. Furthermore, in Fig. 14, although the parameter values are displayed as the biological function state values as they are, values calculated based on one or more parameter values may be displayed as the biological function state values.

[Replacement processing STP3]

[Replacement object selection processing STP3-1]

Subsequently, referring to the image in Fig. 14, the user selects a parameter (biological function state value) to be replaced. The selection may be performed by using a general selection input function adopted in the computer, for example, by clicking a name of a parameter to be replaced on a screen in Fig. 14 by use of a mouse pointer. The object to be replaced is not necessarily selected by input of the user. The system SS may automatically select the object to be replaced. For example, a parameter which is deviated from the normal-type average by a predetermined value or more may be automatically selected as the object to be replaced. Alternatively, among candidates automatically selected by the system SS, the user may select a parameter to be replaced.

[Replacement processing STP3-2]

When accepting selection of the object to be replaced (parameter to be replaced), the system SS replaces a value of the parameter to be replaced with a value of a normal living body (healthy subject), that is, a value displayed in the normal-type average display section 102 in Fig. 14. For example, when replacement processing is carried out by selecting "BETA" from the pre-replacement parameter set shown in Fig. 14 as the parameter to be replaced (hereinafter, this processing is referred to as "BETA replacement"), the value of BETA becomes the normal-type average value "0.39939" and values of the other parameters are the same as values of the pre-replacement parameter set in the post-replacement parameter set. In Fig. 14, the parameter set after BETA replacement is displayed in the BETA replacement display section 105.

When replacement processing is carried out by selecting "Kp" from the pre-replacement parameter set shown in Fig. 14 as the parameter to be replaced (hereinafter, this processing is referred to as "Kp replacement"), the value of Kp becomes the normal-type average value "0.000161" and values of the other parameters are the same as values of the pre-replacement parameter set in the post-replacement parameter set. In Fig. 14, the parameter set after Kp replacement is displayed in the Kp replacement display section 105.

As described above, the present system SS can generate a plurality of post-replacement parameter sets with different replacement ways with respect to one pre-replacement parameter set. By applying these post-replacement parameter sets to the biological model, a plurality of replaced biological models with different replacement ways can be generated.

In the above-mentioned description, one replacement processing, there is only one parameter to be replaced (for example, in the case of BETA replacement, the parameter to be replaced is only BETA). However, in one replacement processing, a plurality of parameters may be replaced. Although replacement with the normal-type average value is made in the above-mentioned description, replacement with the borderline-type average value and the diabetes-type average value may be made. In other words, replacement in the direction of progression of a pathological condition may be made.

The replaced parameter value may be any value. That is, the user can input the replaced parameter value so as to set the value as any value. The processing of generating a plurality of post-replacement parameter sets (replaced biological models) with different replacement ways includes replacement of the same parameter with different values. For example, in the case of BETA in the pre-replacement parameter set, the post-replacement parameter set replaced with the normal-type average value can be regarded as being different from the post-replacement parameter set replaced with the borderline-type average value.

[Post-replacement processing STP4]

[Post-replacement simulation processing STP4-1]

As in the pre-replacement simulation processing STP2-2, the system SS gives the post-replacement parameter set obtained by the replacement processing STP3 to the biological model, makes a calculation based on the biological model and generates post-replacement simulated biological response information (graph showing time course of the blood glucose level and the insulin concentration). This function is achieved according to the pathogenic condition simulator program S3. Hereinafter, the simulated response generated by the post-replacement simulation STP4-1 is referred to as "post-replacement simulated biological response". The post-replacement simulated biological response simulates the OGTT time-series data of the patient with improved pathogenic conditions, which corresponds to the replaced parameter.

[Post-replacement biological response display processing STP4-2]

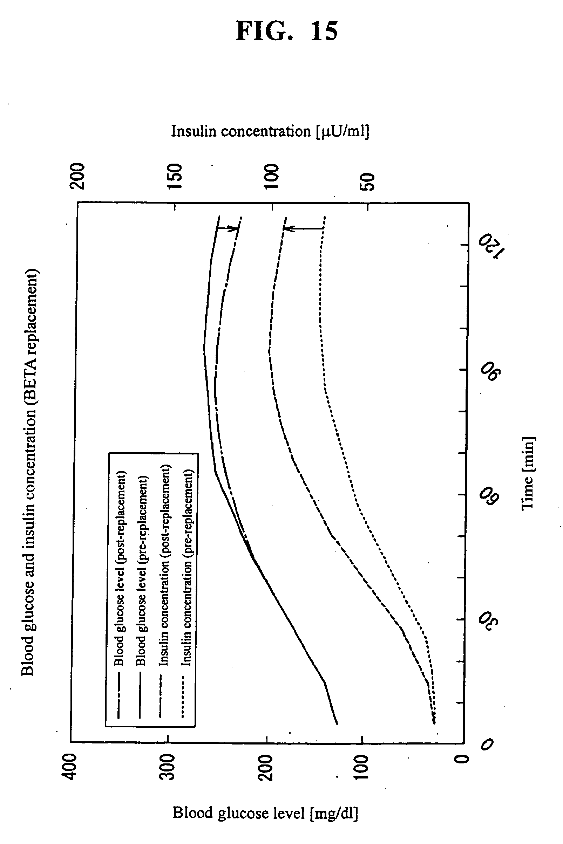

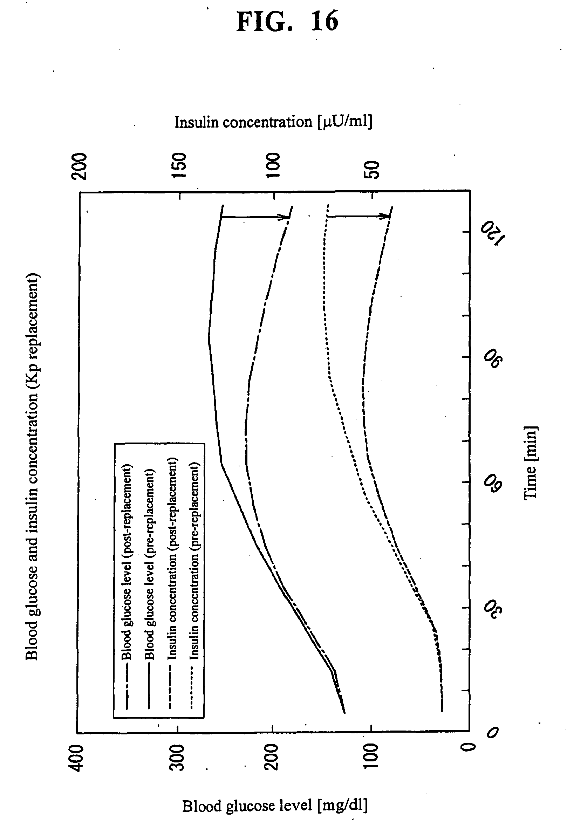

Fig. 15 and Fig. 16 show a displayed image which is generated according to the user interface program S2 of the server S on the basis of a processing result of STP4-1, transmitted from the server S2 to the client C and displayed on the Web browser C1 of the client C.

The image in Fig. 15 displays both pre-replacement simulated biological response and post-replacement simulated biological response subjected to BETA replacement. By outputting both the pre-replacement simulated biological response and the post-replacement simulated biological response, the user can easily grasp how the biological response changes before and after BETA replacement. That is, when a cause of disease BETA (insulin secretion sensitivity) is treated by drugs and the other methods, by looking at the image in Fig. 15, it is possible to check how OGTT data changes before treatment. In other words, the image in Fig. 15 shows judgment support information for supporting judgment of therapeutic effects and the image display function in Fig. 15 also serves as a judgment support information preparing section and a judgment support information display section.

The image in Fig. 16 displays both pre-replacement simulated biological response and post-replacement simulated biological response subjected to Kp replacement. When a cause of disease Kp (peripheral insulin sensitivity) is treated by drugs and the other methods, by looking at the image in Fig. 16, it is possible to check how OGTT data changes before treatment. In other words, the image in Fig. 16 shows judgment support information for supporting judgment of therapeutic effects and the image display function in Fig. 16 also serves as a judgment support information preparing section and a judgment support information display section.

Since both the post-replacement simulated biological responses of a plurality of replaced biological models in Fig. 15 and Fig. 16 are displayed, by comparing the plurality of post-replacement simulated biological responses with one another, the user can also obtain judgment support information on treatment of which cause of disease is the most effective.

[Judgment support information preparation processing STP5]

Although the images in Fig. 15 and Fig. 16 serve as information for supporting judgment of therapeutic effects, here, the judgment support information which is recognizable for the user more easily is generated. Specifically, in processing STP5, information for supporting judgment which replacement (treatment) of a plurality of replacements (treatments) with different ways of replacement is effective is generated.

[Blood glucose lowering level calculation STP5-1]

For each of the plurality of replacements (BETA replacement and Kp replacement), the blood glucose lowering level before and after replacement is calculated. The blood glucose lowering level can be obtained by finding a difference between the blood glucose level before replacement and the blood glucose level after replacement (differential area in the graph).

[Cause occupation ratio calculation/display processing STP5-2]

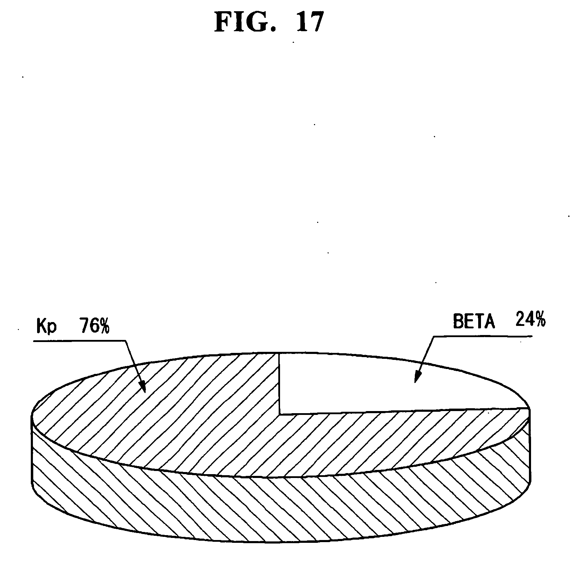

Subsequently, a cause occupation ratio is calculated from the ratio of each of BETA replacement and Kp replacement in the blood glucose lowering level. In Fig. 15 and Fig. 16, the occupation ratio of the cause "BETA" is 24%, while the occupation ratio of the cause "Kp" is 76%, which represents a high value. That is, as the cause of disease, "Kp" is relatively dominant and therapy for "Kp" is more effective than that for "BETA". Fig. 17 is a circle graph showing the cause occupation ratio as judgment support information. An image in Fig. 17 is displayed on the Web browser C1 of the client C. By looking at the image in Fig. 17, it can be judged that therapy for "Kp" has higher therapeutic effects.

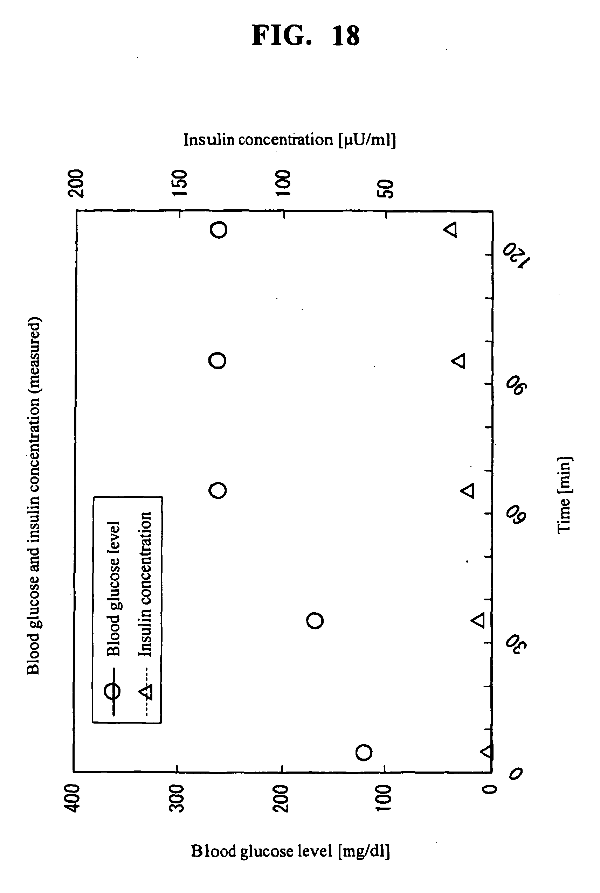

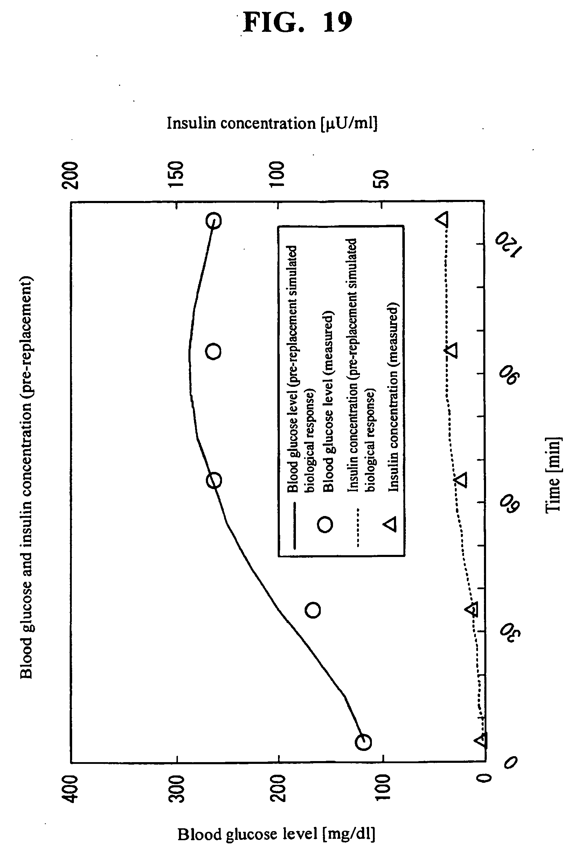

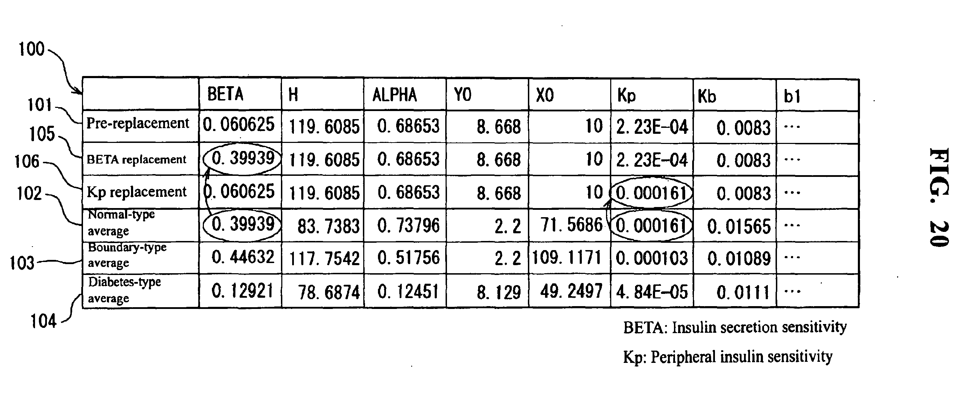

Fig. 18 to Fig. 23 shows images displayed in the case where the processing shown in Fig. 8 is executed for another patient. That is, Fig. 18 is a graph showing input OGTT time-series data. Fig. 19 is a graph showing the input OGTT time-series data and pre-replacement simulated biological response thereof. Fig. 20 shows another image which displays values in the case where BETA replacement and Kp replacement are carried out.

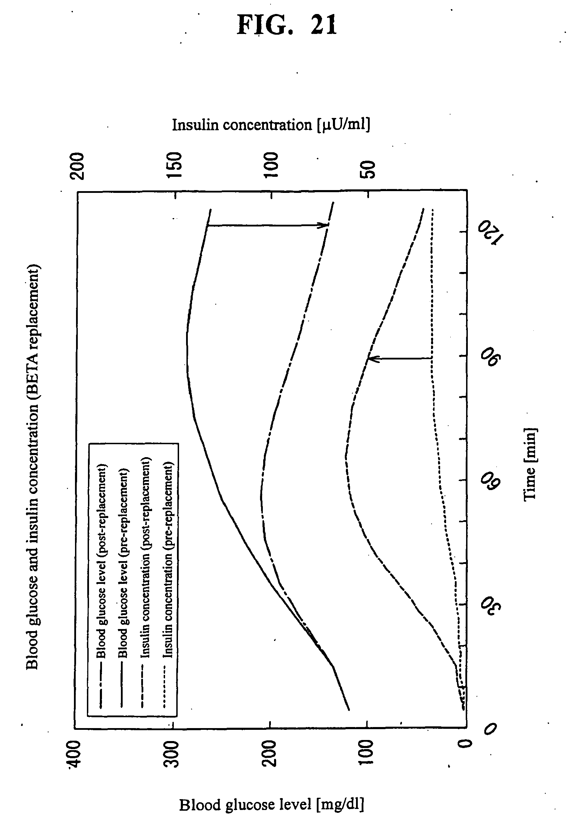

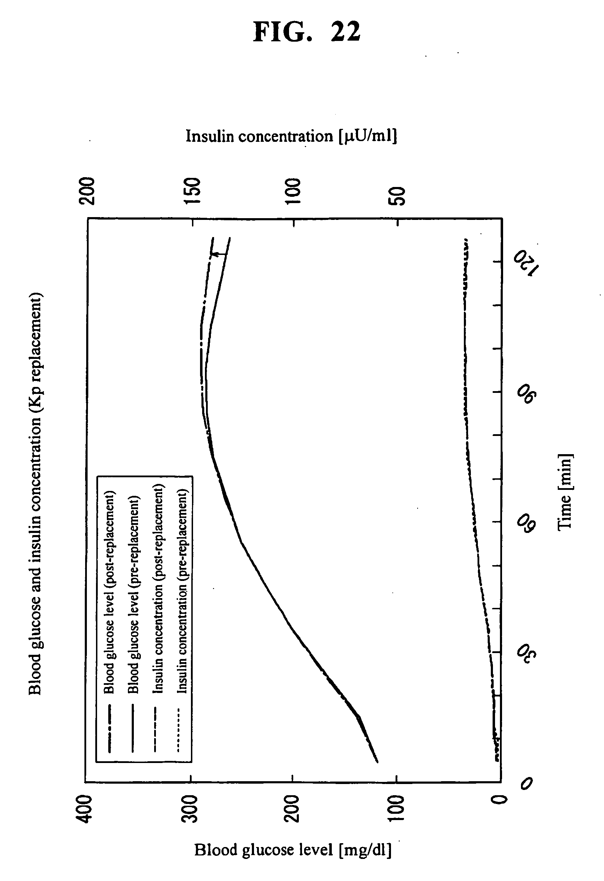

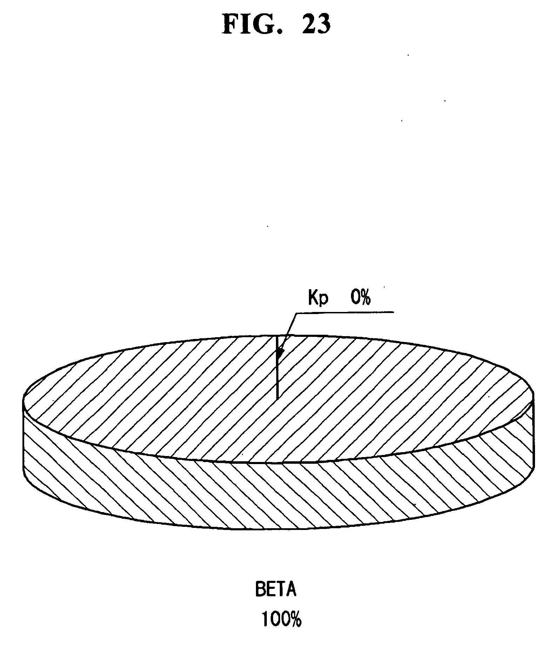

Fig. 21 and Fig. 22 each are a graph showing pre-replacement biological response and post-replacement simulated biological response. Comparison of Fig. 21 with Fig. 22 reveals that the therapy for BETA, that is, the therapy for improving insulin secretion sensitivity has higher therapeutic effects. Fig. 23 is a graph showing the cause occupation ratio calculated from the results in Fig. 21 and Fig. 22. By looking at Fig. 23, the physician can judge that the therapy for improving insulin secretion sensitivity has higher therapeutic effects more easily.

(Second embodiment)

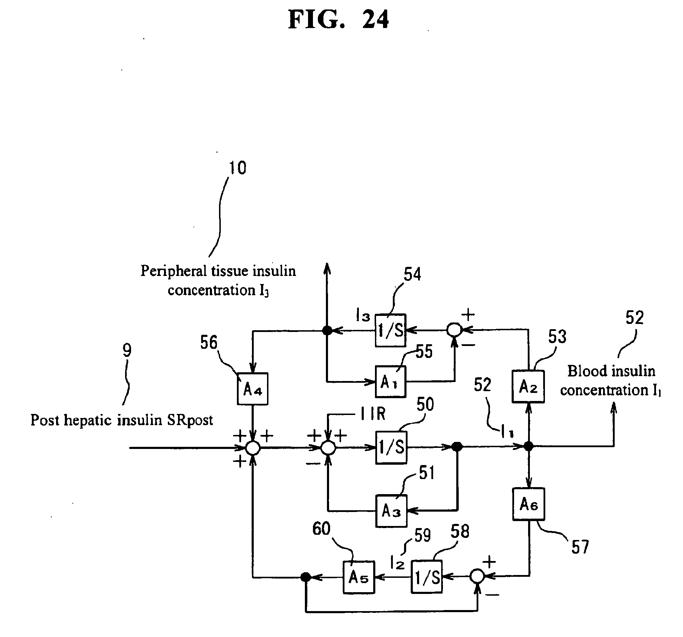

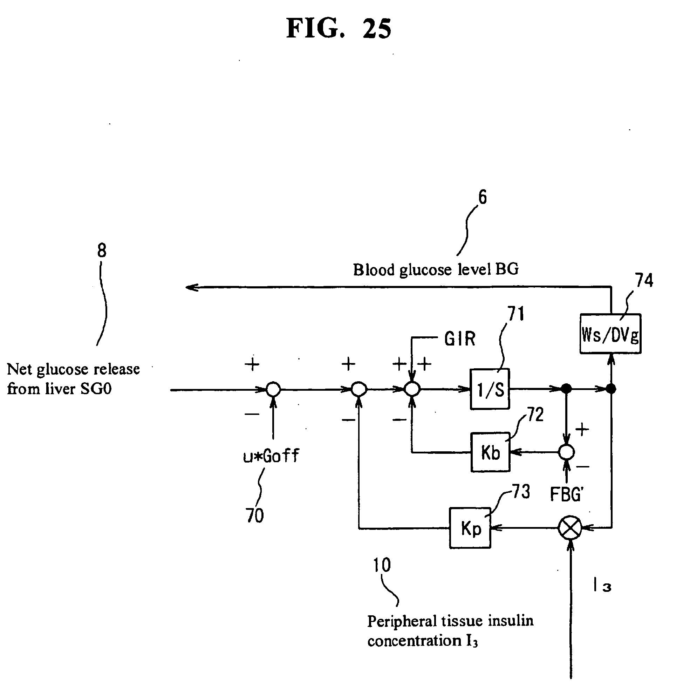

Next, a simulated test computer system of a living body in accordance with a second embodiment (hereinafter simply also referred to as "system") will be described. Since hardware configuration of the present system 100 is similar to the server S in accordance with the above-mentioned first embodiment, description thereof is omitted. As shown in Fig. 24, a liver block 21 of the biological model in the present system 100 is provided with input of insulin infusion rate IIR(t) to a vein. As shown in Fig. 25, a peripheral tissue block 41 of the biological model in the present system 100 is provided with input of glucose infusion rate GIR(t) to a vein. Since the configuration of the biological model is similar to configuration of the biological model in accordance with the first embodiment, description thereof is omitted. The insulin infusion rate IIR(t) to a vein is a value given in glucose clamp as a second test described later. In simulation of a first test (OGTT), calculation is made under IIR(t) = 0. The glucose infusion rate GIR(t) to a vein is a value given in glucose clamp as the second test described later. In simulation of a first test (OGTT), calculation is made under GIR(t) = 0. Hereinafter, operations of the present system 100 will be described.

[Processing procedure of simulated glucose clamp]

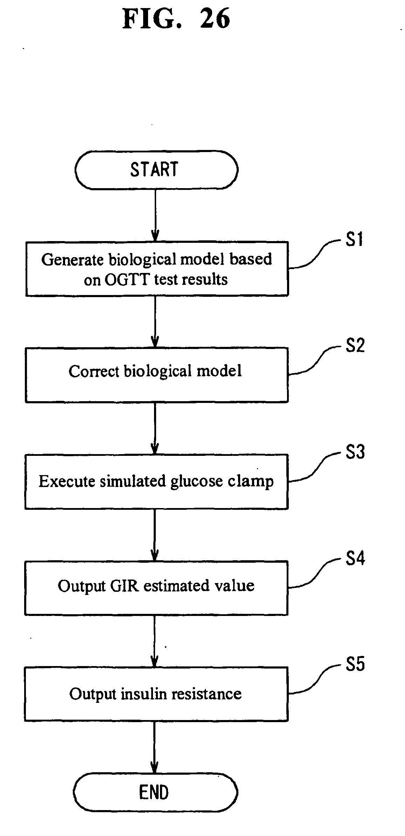

Fig. 26 shows execution procedure of simulated glucose clamp by using the present system 100. First, OGTT (first test) is actually executed for the test subject. When results of OGTT are input to the system 100, the system 100 generates a biological model (Fig. 3) which simulates a biological organ related to diabetes of the test subject (step S1).

Subsequently, the system 100 executes correction processing so that the biological model generated at the step S1 may become a biological model showing the state at the execution of glucose clamp as a second test (step S2). Then, using the biological model obtained at the step S2, the system 100 makes a simulated glucose clamp test (step S3). The system 100 acquires an estimated value of GIR (Glucose Infusion Rate (speed)) obtained in the glucose clamp test by the simulated glucose clamp processing and outputs the estimated value (step S4). Then, the system 100 determines insulin resistance from the GIR estimated value and outputs the insulin resistance (step S5).

[First step S1: biological model generation]

[Biological model generating section]

To allow the above-mentioned biological model shown in Figs. 3 to 5, 24 and 25 to properly simulate the biological organ of each patient, it is necessary to determine parameters and an initial value of variable of the biological model depending on each patient and apply the determined parameters an the initial value to the biological model. Hereinafter, unless specially defined, the initial value of the variable is included in the parameters to be generated.

In order to realize the function of the biological model generating section, the system 100 has a function of determining an internal parameter set which is a set of internal parameters of biological model (hereinafter, also simply referred to as "parameter set"), and generating a biological model to which the determined parameter set is applied. This function is realized by the computer program.

By giving the parameter set generated by the biological model generating section to the biological model, the biological model calculating section is enabled to conduct simulation of a function of biological organ and output a simulated response simulating the actual biological response (test result).

[Parameter set generating section based on OGTT results (first test)]

Hereinafter, a parameter set generating section for generating a parameter set for forming a biological model which simulates a biological organ of the test subject on the basis of results (biological response) of OGTT (Oral Glucose Tolerance Test) as the first test for an actual test subject (living body) will be described. OGTT is a test in which a test subject takes glucose by mouth, blood is taken from the subject multiple times after elapse of predetermined time and blood glucose level and blood insulin concentration are measured. The test has imposed fewer loads on the test subject than glucose clamp and is often carried out.

[OGTT time-series data input: step S1-1]

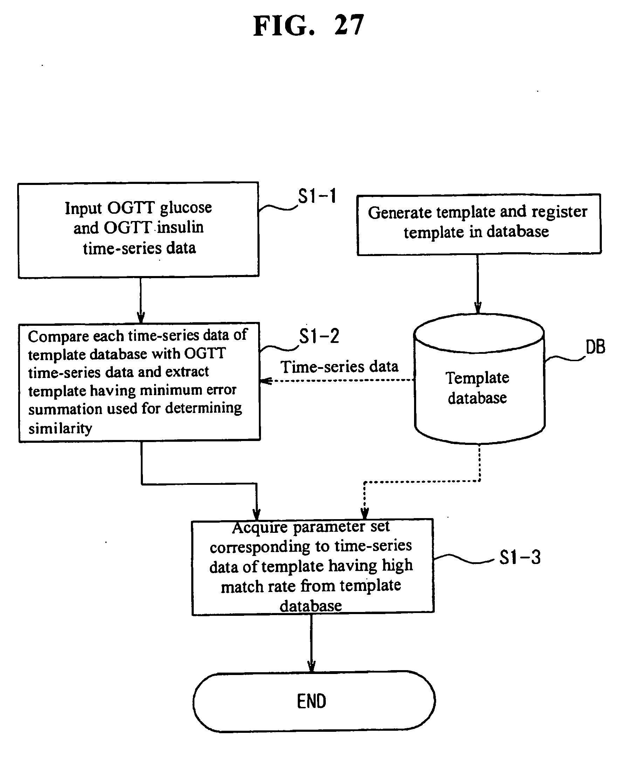

Fig. 27 shows processing procedure in which the parameter set generating section of the system 100 obtains a parameter set of the biological model. As shown in this figure, to find parameters, first, input processing of the OGTT time-series data as actual results (biological response) of the first test is executed (step S1-1). The OGTT time-series data is results of OGTT as the test actually made for the test subject who is a target of simulation of the function of the biological model. The present system receives input as actual results of the first test (function of a first test results input section). Here, OGTT glucose data (blood glucose level change data) and OGTT insulin (blood insulin concentration change data) are input as the OGTT time-series data.

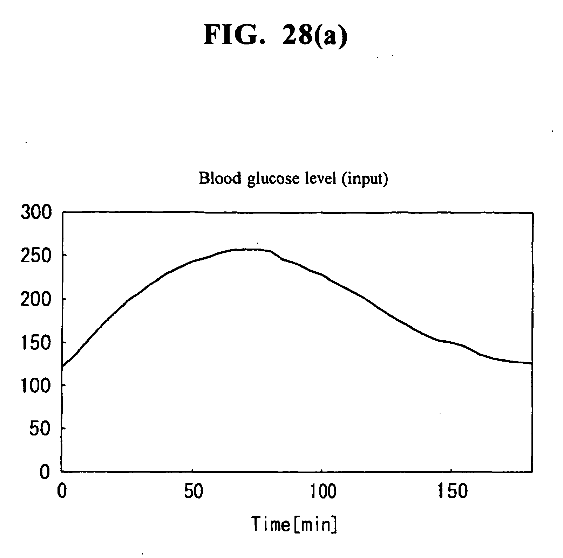

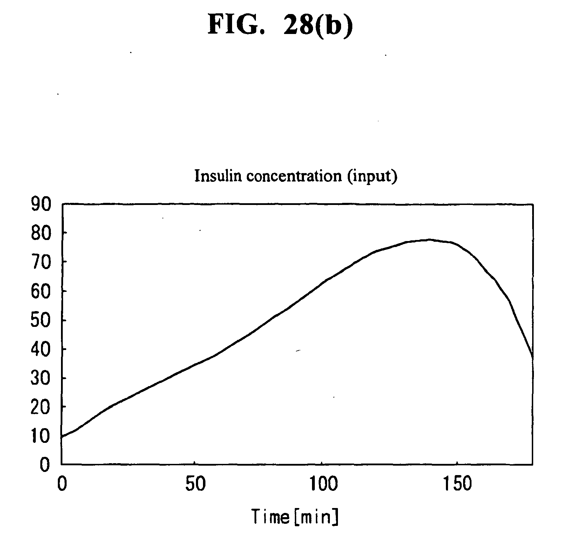

Fig. 28(a) shows an example of the blood glucose level change data and Fig. 28(b) shows an example of the blood insulin concentration change data as OGTT time-series data to be input.

In Fig. 28(a), the blood glucose level change data is measured data corresponding to time course of blood glucose level BG (t), one of output items in the biological model shown in Figs. 3 to 5, 24 and 25.

In Fig. 28(b), the blood insulin concentration change data is measured data corresponding to time course of blood insulin concentration $I_1(t)$, one of output items in the biological model shown in Figs. 3 to 5, 24 and 25.

[Template matching: Step S1-2]

Next, the present system SS matches the input OGTT time-series data to the template of template database DB1.

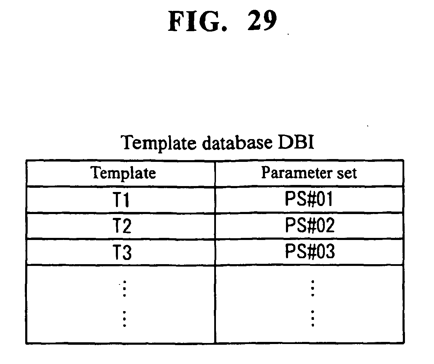

As shown in Fig. 29, the template database DB1 is preliminarily stored with a plurality sets of data, which are biological model reference output values T1, T2, ... as a template and parameter set PS#01, PS#02 ... correspondent to the reference output value to generate the reference output value. To make up a pair of reference output value and parameter set, a random reference output value is assigned by an appropriate parameter set, or on the contrary, a biological model output at the time when a random parameter set is selected is obtained by the biological simulation.

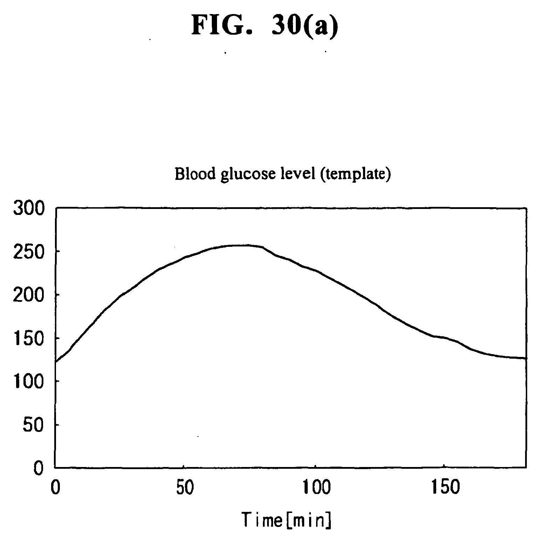

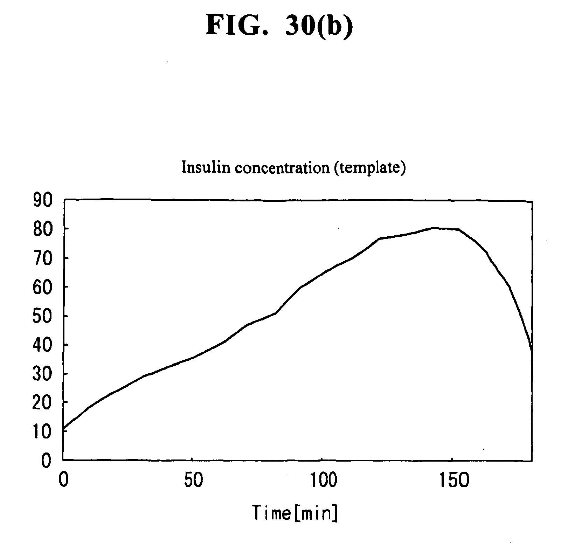

Fig. 30(a) and Fig. 30(b) show examples of the template (reference output value) T1. Fig. 30(a) is a blood glucose change data as a template, which is reference time-series data corresponding to time course of the blood glucose level BG(t), one of output items in the biological model shown in Figs. 3 to 5, 24 and 25. Fig. 30(b) is blood insulin concentration change data as a template, which is reference time-series data corresponding to time course of blood insulin concentration $I_1(t)$, one of output items in the biological model shown in Figs. 3 to 5, 24 and 25.

The system 100 computes similarity between each reference time-series datum of the above-mentioned template database DB1 and OGTT time-series data. The similarity is obtained by obtaining error summation. The error summation is obtained by the following formula.

$$\text{Error summation} = \alpha\Sigma|BG(0)-BGt(0)|+\beta\Sigma|PI(0)-PIt(0)|$$

$$+\alpha\Sigma|BG(1)-BGt(1)|+\beta\Sigma|PI(1)-PIt(1)|$$

$$+\alpha\Sigma|BG(2)-BGt(2)|+\beta\Sigma|PI(2)-PIt(2)|$$

$$+\ldots$$

$$=\alpha\{\Sigma|BG(t)-BGt(t)|\}+\beta\{\Sigma|PI(t)-PIt(t)|\}$$

where

BG: input data blood glucose level [mg/dl]
PI: input data blood insulin concentration [$\mu$U/ml]
BGt: template blood glucose level[mg/dl]
PIt: template blood insulin concentration [$\mu$U/ml]
t: time[minute]

Here, $\alpha$ and $\beta$ are coefficient used for normalization

$$\alpha=1/\text{Average } \{\Sigma BG(t)\}$$

$$\beta=1/\text{Average } \{\Sigma PI(t)\}$$

The average of the formula shows average level to all templates stored in the template database DB1.

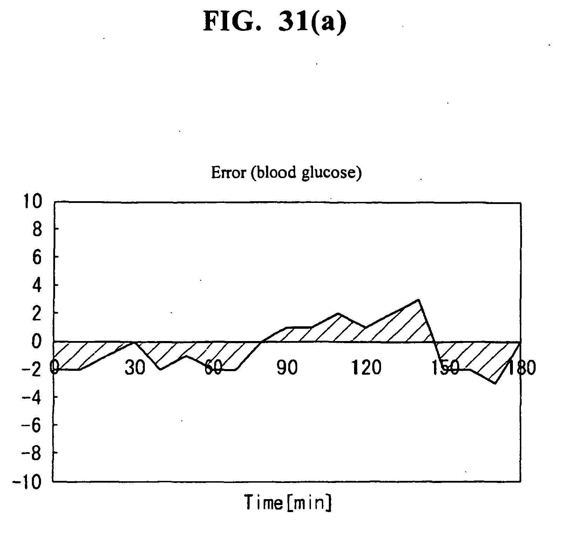

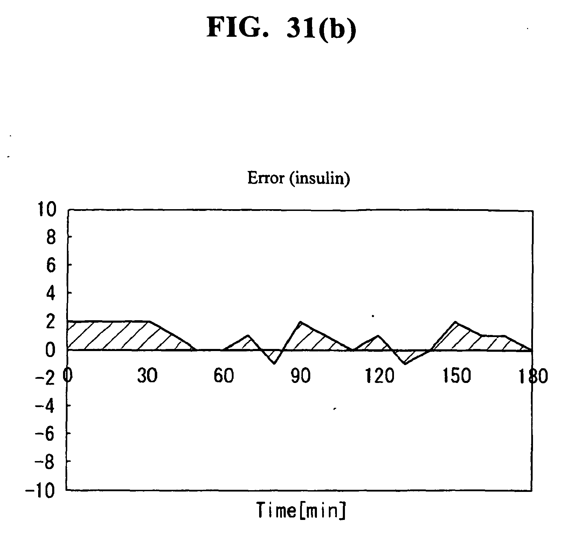

Fig. 31(a) and Fig. 31(b) show the OGTT time-series error summation(no normalization) to the template T1. More specifically, Fig. 31(a) shows an error between the blood glucose level of Fig. 28(a) and the blood glucose level of Fig. 30(a). Fig. 31(b) shows an error between the insulin of Fig. 28 (b) and the insulin of Fig. 30(b).

Based on Fig. 28(a) and Fig. 28(b) input data (date in the range of 0 to 180 minutes every 10 minutes) and Fig. 30(a) and Fig.30 (b) template T1,

$$\Sigma|BG(t) - BGt(t)| = 29$$

$$\Sigma|PI(t) - PIt(t)| = 20$$

where, provided $\alpha$= 0.00035, $\beta$= 0.00105

```
error summation = (0.00035 × 29) + (0.00105 × 20)

                = 0.03115
```

Thus, CPU 100a obtains an error summation to each template in the template database DB1, and determines the template having the minimum error summation (similarity). Thus, CPU 100a determines the template which is the most approximate to OGTT time-series data (Step S1-2).

[Acquisition of parameter set: Step 1-3]

Further, in a step S1-3, the system SS obtains from template database DB1 a parameter set corresponding to the template which has been determined in the step S1-2 and has been judged to be similar in the step S1-3. That means, a parameter set PS#01 corresponding to the template T1 is obtained (Refer to Fig. 29).
The table below exemplifies the specific numeral values of the parameter values included in the parameter set PS#01 obtained by the above-mentioned way.

Parameter set PS#01 corresponding to template T1

|  | Parameter | Value | Unit |
|---|---|---|---|
| Pancreas | h | 92.43 | [mg/dl] |
|  | $\alpha$ | 0.228 | [1/min] |
|  | $\beta$ | 0. 357 | $\cdot$ (dl/mg) $\cdot$ (1/min)] [($\mu$U/ml) $\cdot$ (dl/mg) $\cdot$ (1/min)] |
|  | M | 1 | [1/min] |
|  | X (0) | 336. 4 | [$\mu$U/ml] |
|  | Y (0) | 4.4 | [($\mu$U/ml) $\cdot$ (1/min)] |
| Insulin kinetics | $A_1$ | 0.025 | [1/min] |
|  | $A_2$ | 0.042 | [1/min] |
|  | $A_3$ | 0.435 | [1/min] |
|  | $A_4$ | 0.02 | [1/min] |
|  | $A_5$ | 0.394 | [1/min] |
|  | $A_6$ | 0.142 | [1/min] |
| Peripheral tissues | Kb | 0.009 | [1/min] |
|  | Kp | 5. 28E-05 | [(ml/$\mu$U) $\cdot$ (1/min)] |
|  | u | 0.6 |  |
| Liver | $A_7$ | 0. 47 |  |
|  | Kh | 0.0000462 | [(ml/$\mu$U) $\cdot$ (1/min) $\cdot$ (dl/kg)] |
|  | b2 | 1.1 |  |
|  | r | 0.98 |  |
|  | $\alpha2$ | 0. 228 |  |
|  | $I_{4off}$ | 5 | [$\mu$U/ml] |

A method for generating the parameter set (biological model) is not limited to the above-mentioned template matching. For example, the parameter sets may be generated according to a genetic algorithm. That is, the genetic algorithm that an initial population of the parameter sets is randomly generated and the parameter sets (individuals) included in the initial population is subjected to selection, crossing and mutation processing to generate a new sub-population can be used. Among the parameter sets according to the genetic algorithm, the parameter set outputting simulated results of the first test which is approximate to the input results of the first test. As long as the biological model generating section can generate the biological model capable of outputting of simulated test results simulating the inputted results of the first test, the generating method is not specifically limited.

[Simulated response acquiring section (biological model calculating section)]

When the above-mentioned parameter set PS#01 is given to the biological model, the system 100 makes calculation based on the biological model, and outputs simulated response information which simulates the input OGTT time-series data (time courses in blood glucose level and insulin concentration) (functions as a simulated response acquiring section of the system SS (biological model calculating section)).

That is, the system 100 is capable of simulating a biological organ of a patient based on the generated biological model.

The user such as a physician of the system 100 can confirm correctness of the generated biological model by comparing output simulated response information of OGTT with actual OGTT time-series data. The function of the biological model calculating section is used for simulation of OGTT (first test) as well as simulation of glucose clamp (second test).

[Step S2: biological model correcting section]

In biological model correction processing, adjustment factor b2 of an initial value of total amount of insulin capable of secretion from pancreas (initial secretion) X(0) and hepatic glucose release inhibition ratio among the parameters shown in Table 1 is set as 0. This correction is made to put the parameters of the biological model into the state at execution of glucose clamp as the second test (steady state of blood glucose level).

In the actual glucose clamp test, when a short time has elapsed since start of the test, since it is put into the steady state where the blood glucose level becomes constant at a target value under certain insulin infusion rate (the state where the blood glucose level does not change), the amount of insulin secreted from pancreas becomes 0 in response to change in glucose. That is, since the insulin secretional capacity X(0) varies between individuals, by previously setting the amount as 0, test results without variation in insulin secretion between individuals can be obtained. In the biological model correction processing, since the insulin initial secretion from pancreas is set as 0, the above-mentioned steady state can be obtained immediately and thus, calculation processing for obtaining the steady state becomes unnecessary.

To set hepatic glucose release (endogenous glucose release rate) HGP(t) in liver model as 0, an adjustment factor b2 about the hepatic glucose release inhibition ratio is made 0. In the steady state in the actual glucose clamp test, since insulin concentration in the portal vein of liver is substantially constant, glucose release from liver is suppressed (becomes 0) and the amount of glucose infused from outside of the living body can be regarded as the amount of consumed glucose. In the biological model correction processing, since the hepatic glucose release HGP(t) is made 0, the above-mentioned steady state can be obtained immediately and thus, calculation processing for obtaining the steady state becomes unnecessary. HGP(t) may be made 0, for example, by replacing the above-mentioned formula of finding HGP(t) with HGP(t) = 0, besides the processing of setting the parameter b2 as 0.

The biological model is not necessarily corrected. That is, the above-mentioned steady state can be obtained by making a calculation assuming that glucose infusion and insulin infusion as in actual glucose clamp is carried out.

[Step S3: simulated glucose clamp processing section; second test simulating section]

In simulation of the first test (OGTT) using the biological model, blood glucose level BG(t) and blood insulin concentration I1(t) are reproduced as first test simulated response in the case where glucose absorption from digestive tract RG(t) is given to the biological model as first test simulated input. However, in simulation of the second test (glucose clamp), the blood glucose level BG(t) (and the blood insulin concentration I1 (t)) are reproduced as second test simulated response in the case where insulin infusion rate IIR(t) (refer to Fig. 24) and glucose infusion rate GIR(t) (refer to Fig. 25) are given to the biological model as second test simulated input. In simulation of glucose clamp, calculation is made assuming that the glucose absorption from digestive tract RG(t) is 0.

In glucose clamp, the glucose infusion rate GIR(t) for obtaining target blood glucose level BG(t) by the predetermined insulin infusion rate IIR(t) is to be found. Thus, in the simulated glucose clamp processing of the system 100, predetermined IIR(t) (for example, 1.46 [$\mu$U/kg/min]) is given to the biological model as simulated input and a second simulated input GIR(t) [mg/kg/min] is changed so as to obtain the target blood glucose level BG(t) (for example, 95 [mg/dl]).

IIR(t) may be either a constant value or a value according to weight of the test subject. That is, IIR(t) may be obtained by the following formula: IIR (t) = 95 [μU/min]/weight [kg], which is given as simulated input. Furthermore, the value "95" in the formula of IIR(t) is not specifically limited and may be an arbitrary value, for example, between 80 to 100. The arbitrary value may be set by the user of the system 100. In this embodiment, since the biological model is in the steady state in the glucose test by the above-mentioned correction processing, the biological model may be constant at all times during calculation in the simulated glucose clamp. In other words, in the actual glucose clamp, to put the biological model into the steady state, first, a generous amount of insulin is infused and then less certain amount of insulin is infused. In this embodiment, however, since the biological model which is previously set in the steady state, a certain amount of insulin have only to be infused from the beginning.

[GIR estimation processing section]

To find GIR(t) capable of achieving the target blood glucose level in simulated glucose clamp, the blood glucose level in the case where simulated glucose clamp simulation is carried out by varying the value of GIR(t) as simulated input is found and when the blood glucose level is close to the target blood glucose level or the target blood glucose level, the GIR(t) can be estimated as "GIR(t) capable of achieving the target blood glucose level".

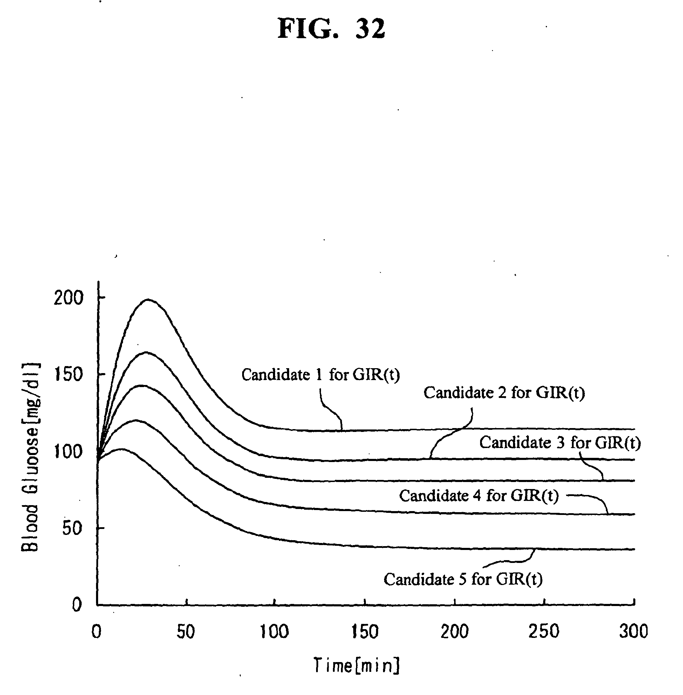

Fig. 32 shows change in blood glucose level in the case where the simulated glucose clamp processing is carried out using a plurality of candidates for GIR(t) 1 to 5. When the target blood glucose level is 95 [mg/dl], the candidate 3 is the most suitable for achieving the target blood glucose level and in this case, the candidate 3 can be obtained as a GIR(t) estimated value.
To vary the value of GIR(t), for example, genetic algorithm can be adopted. That is, new GIR(t) is generated by executing selection, crossing and mutation processing to the initial value of GIR(t). Alternatively, the value of the candidate for GIR(t) may be corrected so that a difference between the blood glucose level and the target blood glucose level as simulated response in the case where simulated glucose clamp processing is carried out using the candidate for GIR(t) as simulated input may be reduced to find the GIR(t) estimated value capable of achieving the target blood glucose level.

[Step S4: simulated clamp result output]

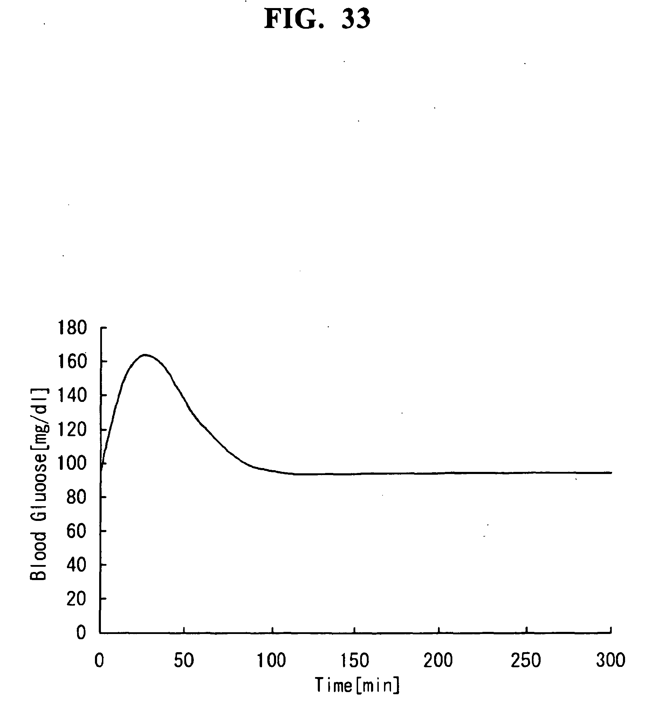

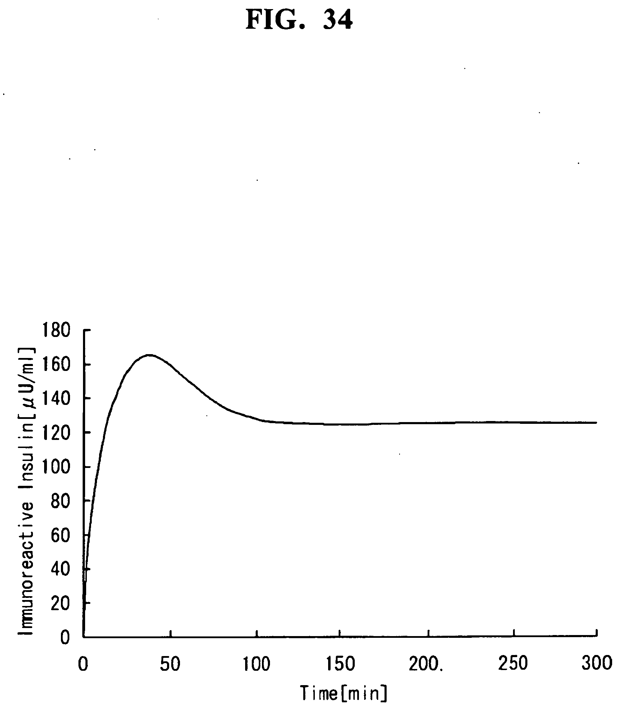

The estimated value of GIR(t) thus obtained (for example, 10.65 [mg/kg/min]) is outputted to the display 120 of the system 100 (step S4 in Fig. 26). Figs. 33 and 34 show time course of the blood glucose level and the insulin concentration as results of GIR(t) thus obtained in glucose clamp simulation. The results shown in Figs. 33 and 34 are outputted to the display 120 of the system 100.
By looking at the results displayed on the display 120 in Figs. 33 and 34, the user of the system 100 such as a physician can visually confirm that the simulated blood glucose level is or close to the target blood glucose level, thereby confirming validity of the GIR(t) estimated value. Moreover, by comparing the simulated response information of the output OGTT with the actual OGTT time-series data, correctness of the generated biological model can be confirmed.

[Step S5: insulin resistance determination]

Based on the GIR(t) estimated value, the system 100 further determines presence or absence of insulin resistance of the test subject (the function as an insulin resistance determining section). Specifically, when the GIR(t) estimated value is lower than a first threshold value (for example, 4), the system 100 determines that apparent insulin resistance is present. When GIR(t) is higher than the first threshold value and lower than a second threshold value (for example, 6), the system 100 determines that there is a tendency to insulin resistance. When GIR(t) is higher than the second threshold value, the system 100 determines that the test subject is normal. The determination result is outputted to the display 120.
The system 100 outputs presence or absence (or extent) of insulin resistance, thereby providing reference information when the physician determines insulin resistance. The insulin resistance need not be determined or output. Since the physician can determine insulin resistance from the value of GIR, the system 100 may have only to output the GIR estimated value.

[Simulation results]

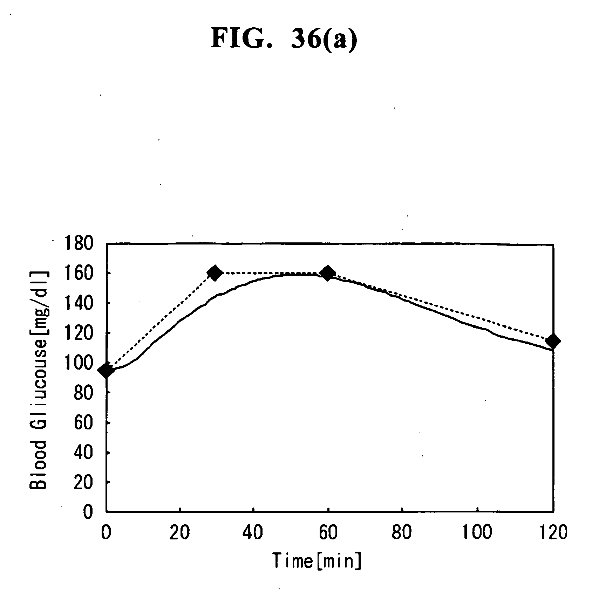

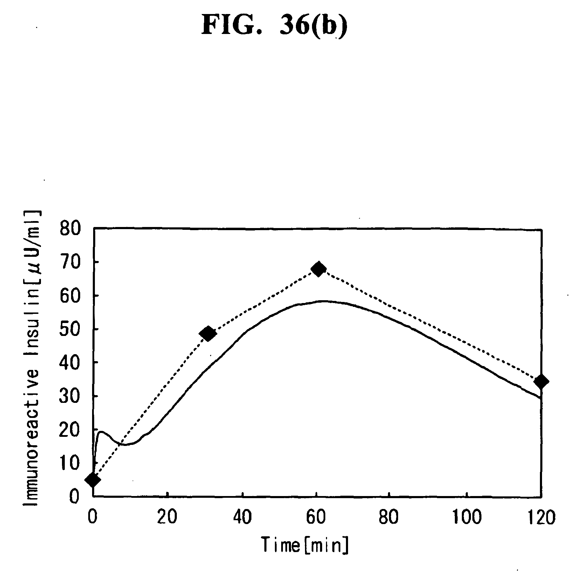

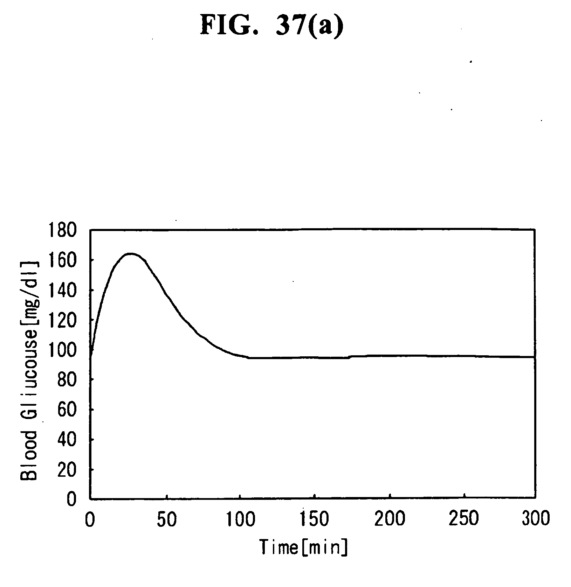

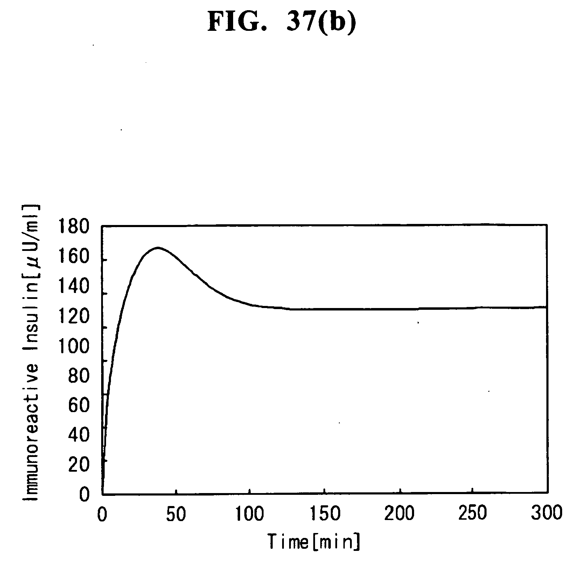

Fig. 36(a) to Fig. 41(b) show results obtained by finding the GIR estimated value from the actual OGTT results for the test subjects A, B and C. Fig. 36 (a), (b) and Fig. 37 (a), (b) are simulation results of the test subject A. Among the actual OGTT test results, change in the blood glucose level is represented by a dotted line in Fig. 36(a) and change in the insulin value is represented by a dotted line in Fig. 36(b). Solid lines in Figs. 36(a), (b) show OGTT simulation results of the biological model generated based on these test results (Fig. 36(a) shows change in the blood glucose level and Fig. 36(b) shows change in the insulin value).

Fig. 37(a), (b) show results of simulated glucose clamp performed based on the generated biological model. Here, 10.68 is calculated as the GIR estimated value when the target blood glucose level becomes 95 [mg/dl] (the fasting blood glucose level of the test subject A at OGTT). That is, in the case of GIR value = 10.68, as shown in Fig. 37(a), the result of simulated glucose clamp (blood glucose level) becomes substantially equal to the target blood glucose level = 95 [mg/dl] and 10.68 is found as the GIR estimated value. Fig. 37(b) shows the result of simulated glucose clamp (insulin) at the GIR estimated value. From the calculated GIR estimated value = $10.68 \geq 10$, the test subject A is determined as normal.

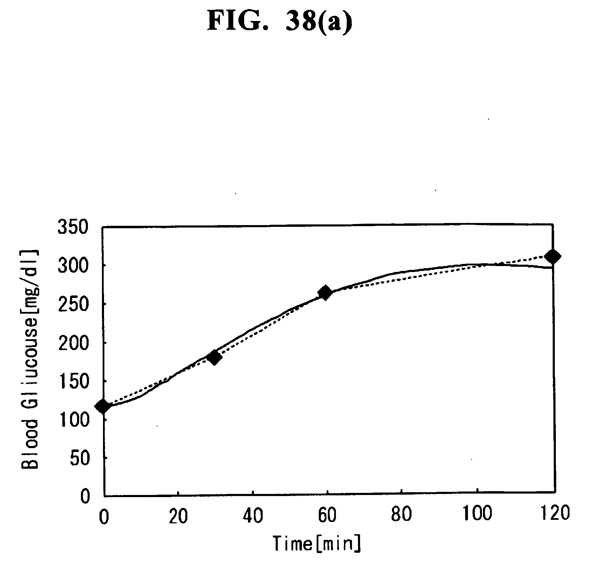

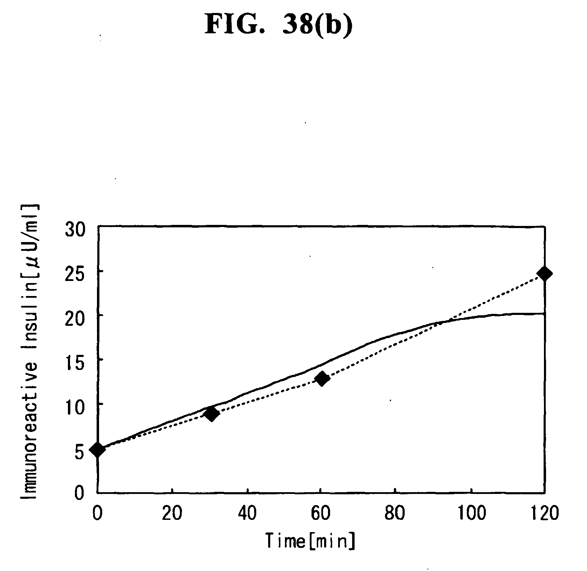

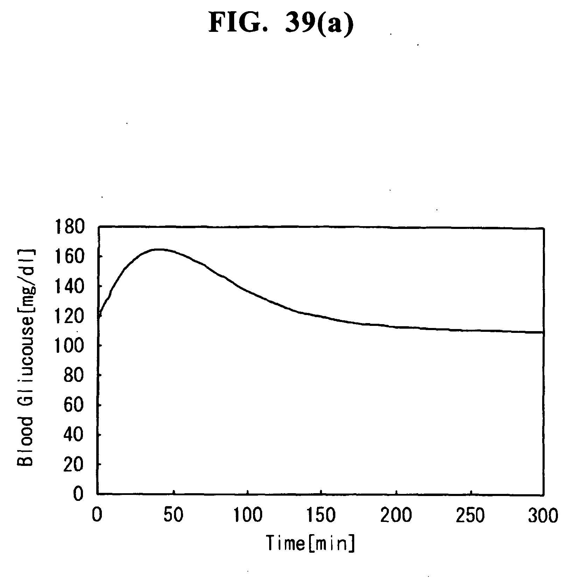

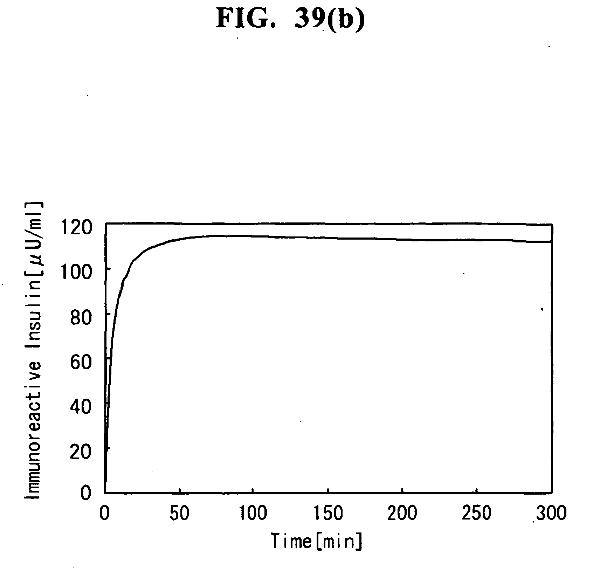

Figs. 38(a), (b) and Figs. 39(a), (b) show simulation results of the test subject B. Among the actual OGTT test results, change in the blood glucose level is represented by a dotted line in Fig. 38(a) and change in the insulin value is represented by a dotted line in Fig. 38(b). Solid lines in Figs. 38(a), (b) show OGTT simulation results of the biological model generated based on these test results (Fig. 38(a) shows change in the blood glucose level and Fig. 38(b) shows change in the insulin value).

Figs. 39(a), (b) show results of simulated glucose clamp performed based on the generated biological model. Here, 4.7 is calculated as the GIR estimated value when the target blood glucose level becomes 118 [mg/dl] (the fasting blood glucose level of the test subject B at OGTT). That is, in the case of GIR value = 4.7, as shown in Fig. 39(a), the result of simulated glucose clamp (blood glucose level) becomes substantially equal to the target blood glucose level = 118 [mg/dl] and 4.7 is found as the GIR estimated value. Fig. 39(b) shows the result of simulated glucose clamp (insulin) at the GIR estimated value. From the calculated GIR estimated value = 4.7 ($6 \geq 4.7 > 4$), the test subject B is determined as having a tendency to insulin resistance.

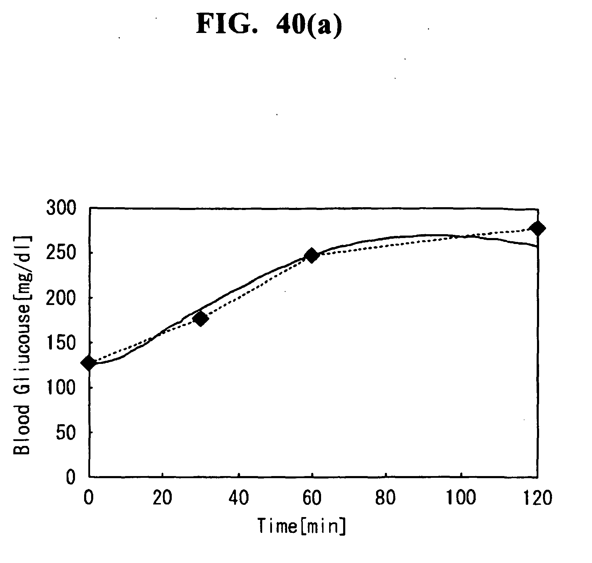

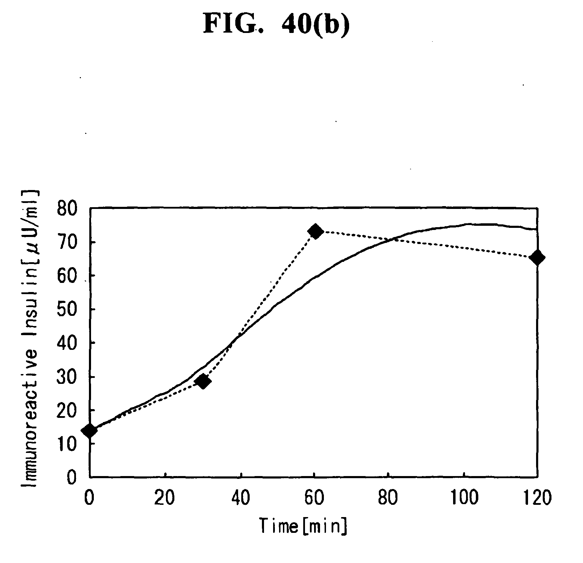

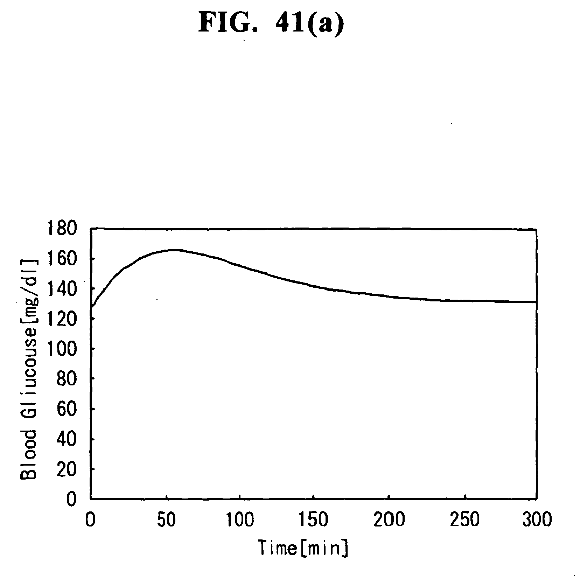

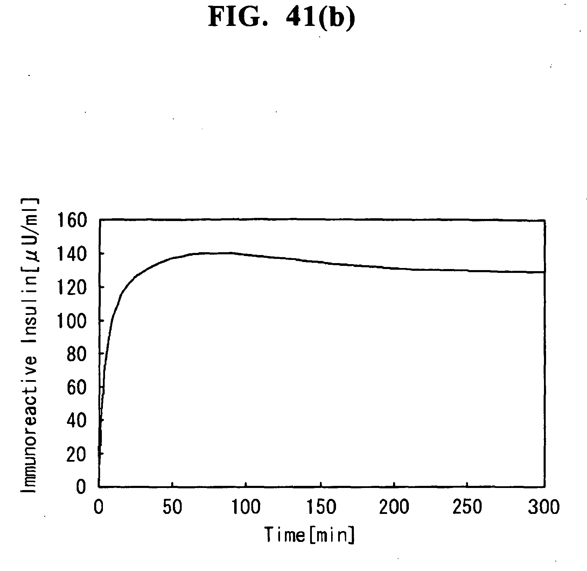

Figs. 40(a), (b) and Figs. 41(a), (b) show simulation results of the test subject C. Among the actual OGTT test results, change in the blood glucose level is represented by a dotted line in Fig. 40(a) and change in the insulin value is represented by a dotted line in Fig. 40(b). Solid lines in Figs. 40(a), (b) show OGTT simulation results of the biological model generated based on these test results (Fig. 40(a) shows change in the blood glucose level and Fig. 40(b) shows change in the insulin value).

Fig. 41(a), (b) show results of simulated glucose clamp performed based on the generated biological model. Here, 2.98 is calculated as the GIR estimated value when the target blood glucose level becomes 127 [mg/dl] (the fasting blood glucose level of the test subject C at OGTT). That is, in the case of GIR value = 2.98, as shown in Fig. 41 (a), the result of simulated glucose clamp (blood glucose level) becomes substantially equal to the target blood glucose level = 127 [mg/dl] and 2.98 is found as the GIR estimated value. Fig. 41(b) shows the result of simulated glucose clamp (insulin) at the GIR estimated value. From the calculated GIR estimated value = 2.98 ($4 \geq 2.98$), the test subject C is determined as having apparent insulin resistance.

The present invention is not limited to the above-mentioned embodiments and can be variously modified. For example, the present system can be applied to diseases other than diabetes. The first test and the second test are not limited to OGTT and glucose clamp and may be other tests.

The other examples of the second test targeted for diabetes include IVGTT (Intravenous Glucose Tolerance Test). IVGTT is a test of examining insulin sensitivity from a glucose vanishing line by infusing glucose into a vein by bolus injection (injecting a large amount of glucose for a short time) at fasting of the test subject and collecting blood every 5 minutes. In the case where IVGTT is carried out simulatively, when the value of GIR(t) corresponding to the bolus injection is given to the biological model as simulated input, change in the blood glucose level can be obtained as simulated response of IVGTT.

The foregoing detailed description and accompanying drawings have been provided by way of explanation and illustration, and are not intended to limit the scope of the appended claims. Many variations in the presently preferred embodiments illustrated herein will be obvious to one of ordinary skill in the art, and remain within the scope of the appended claims and their equivalents.

**Claims**

1. A medical simulation system comprising:

   biological response input means for receiving input of biological response information representing biological response;
   biological model generating means for generating a biological model which simulates biological functions by generating a plurality of biological function state values for generating simulated response which simulates the biological response;
   replacing means for replacing at least a part of a plurality of the biological function state values shown by the biological model; and
simulating means for generating post-replacement simulated biological response on the basis of the biological model which reflects the replaced value.

2. The medical simulation system according to Claim 1, further comprising:

   display means for displaying the post-replacement simulated biological response.

3. The medical simulation system according to Claim 1 or 2, wherein
the replacing means is configured to replace the biological function state values to be replaced with values which a normal living body ought to have.

4. The medical simulation system according to any Claim 1 through 3, further comprising:

   biological function state value display means for displaying a plurality of the biological function state values.

5. The medical simulation system according to any Claim 1 through 4, further comprising:

   selecting means for selecting a value to be replaced from a plurality of the biological function state values.

6. The medical simulation system according to Claim 2, wherein
the display means is configured to display pre-replacement biological response and the post-replacement simulated biological response, wherein the pre-replacement biological response corresponds to the biological function state values which is not replaced.

7. The medical simulation system according to Claim 6, wherein
The display means is configured to display input biological response or simulated biological response as the pre-replacement biological response, wherein the input biological response is received by the biological response input means and the simulated biological response is generated by the biological model which corresponds to the biological function state values being not replaced.

8. The medical simulation system according to any Claim 2, 6 and 7, wherein
the display means is configured to display biological response by a graph showing time course of the biological response.

9. The medical simulation system according to any Claim 1 through 8, wherein
The biological model is formed of a mathematical model including a plurality of parameters about biological functions, and the biological function state values are the parameters or values prepared by using the parameters.

10. The medical simulation system according to any Claim 1 through 9, further comprising:

    judgment support information preparing means for generating judgment support information on the basis of the post-replacement simulated biological response, the judgment support information being used for supporting judgment of therapeutic effects.

11. The medical simulation system according to Claim 10, wherein
the judgment support information preparing means is configured to generate the judgment support information on the basis of a plurality of the post-replacement simulated biological responses generated by the simulating means using a plurality of the biological models with different ways of replacing the biological function state values.

12. The medical simulation system according to Claim 10 or 11, further comprising:

    judgment support information display means for displaying the judgment support information.

13. The medical simulation system according to Claim 12, wherein
the judgment support information display means is configured to display a graph showing therapeutic effects.

14. A computer program product comprising:

a computer readable medium, and

software instructions, on the computer readable medium, for enabling the computer to perform predetermined operations comprising:

receiving input of biological response information representing biological response;

generating a biological model which simulates biological functions by generating a plurality of biological function state values for generating simulated response which simulates the biological response;

replacing at least a part of a plurality of the biological function state values shown by the biological model; and

generating post-replacement simulated biological response on the basis of the biological model which reflects the replaced value.

15. A computer system adapted to perform a simulated test of a living body comprising:

a processor, and

a memory, under control of the processor, including software instructions adapted to enable the computer system to perform operations comprising:

receiving input of results of a first test to a living body;

generating a biological model for performing a second test which is different from the first test on the basis of the input results of the first test; and

performing computer simulation of the second test using the biological model.

16. The computer system according to Claim 15, wherein

the generating step generates a biological model capable of generating the simulated test results which simulate the input first test results.

17. The computer system according to Claim 16, wherein the memory further includes software instructions adapted to enable the computer system further to:

apply correction for performing the second test to the biological model capable of generating the simulated test results which simulate the input first test results.

18. The computer system according to any Claim 15 through 17, wherein

the biological model is configured to generate simulated response which simulates biological response in an actual second test when simulated input corresponding to input given to the living body in the actual second test is given, and

the performing step gives the simulated input to the generated biological model and performs the computer simulation of the second test.

19. The computer system according to any Claim 15 through 18, wherein

the first test and the second test are tests on a common disease which are different from each other.

20. The computer system according to Claim 19, wherein

the disease is diabetes.

21. The computer system according to any Claim 15 through 20, wherein

the first test is an oral glucose tolerance test (OGTT).

22. The computer system according to any Claim 15 through 21, wherein

the second test is glucose clamp.

23. The computer system according to any Claim 15 through 22, wherein

the biological model is configured to output change in blood glucose level of the living body when an insulin infusion rate and a glucose infusion rate input thereto, and

the performing step finds a glucose infusion rate at which the blood glucose level substantially becomes a target value when a predetermined insulin infusion rate is input to the biological model.

24. The computer system according to Claim 23, wherein the memory further includes software instructions adapted to enable the computer system further to:

determine insulin resistance from the glucose infusion rate obtained by the performing step.

25. A computer program product for enabling a computer to perform a simulated test of a living body comprising:

a computer readable medium, and
software instructions, on the computer readable medium, for enabling the computer to perform predetermined operations comprising:

receiving input of results of a first test to a living body;
generating a biological model for performing a second test which is different from the first test on the basis of the input results of the first test; and
performing computer simulation of the second test using the biological model.

# FIG. 1

# FIG. 2

# FIG. 3

# FIG. 4

FIG. 5

# FIG. 6

# FIG. 7

# FIG. 8

```
                                    ( START )
                                        │
                                        ▼
Biological response          ┌─────────────────────────┐
input processing             │  Input OGTT data as biological │
STP1                         │  response information    │
                             └─────────────────────────┘
                                        │
                                        ▼
                             ┌─────────────────────────┐
                             │  Acquire parameter set of │──── STP2-1
                             │  biological model        │
                             └─────────────────────────┘
                                        │
                                        ▼
                             ┌─────────────────────────┐
                             │  Pathogenic condition simulation │── STP2-2
                             │  (pre-replacement)       │
                             └─────────────────────────┘
Pre-replacement processing              │
STP2                                    ▼
                             ┌─────────────────────────┐
                             │  Display                 │
                             │   ⌠ Display parameter set │──── STP2-3
                             │   ⎨ Display OGTT data     │
                             │   ⌡ reproduction value    │
                             └─────────────────────────┘
                                        │
                                        ▼
                             ┌─────────────────────────┐
                             │  Accept selection of     │──── STP3-1
                             │  object to be replaced   │
Replacement processing       └─────────────────────────┘
STP3                                    │
                                        ▼
                             ┌─────────────────────────┐
                             │  Replace                 │──── STP3-2
                             └─────────────────────────┘
                                        │
                                        ▼
                             ┌─────────────────────────┐
                             │  Pathogenic condition simulation │── STP4-1
                             │  (post-replacement)      │
Post- replacement processing └─────────────────────────┘
STP4                                    │
                                        ▼
                             ┌─────────────────────────┐
                             │  Display post-replacement │──── STP4-2
                             │  biological response (OGTT) │
                             └─────────────────────────┘
                                        │
                                        ▼
                             ┌─────────────────────────┐
                             │  Calculate blood glucose lowering │
                             │  level from biological response │── STP5-1
Judgment support information │  before and after replacement │
preparation processing       └─────────────────────────┘
STP5                                    │
                                        ▼
                             ┌─────────────────────────┐
                             │  Calculate and display cause │──── STP5-2
                             │  occupation ratio        │
                             └─────────────────────────┘
                                        │
                                        ▼
                                    ( END )
```

# FIG. 9

Blood glucose and insulin concentration (measured)

Insulin concentration [µU/ml]

Blood glucose level [mg/dl]

Time [min]

Legend: Blood glucose level; Insulin concentration

# FIG. 10

Parameter set acquisition processing of biological model STEP2-1

Generate template and register template in database

STP2-1-1

Compare each time-series data of template database with OGTT time-series data and extract template having minimum error summation used for determining similarity

Time-series data

Template database

DB1 (24)

Acquire parameter set corresponding to time-series data of template having high match rate from template database

STP2-1-2

END

# FIG. 11

Template database DBI

| Template | Parameter set |
|----------|---------------|
| T1 | PS#01 |
| T2 | PS#02 |
| T3 | PS#03 |
| ⋮ | ⋮ |

# FIG. 12 (a)

Blood glucose level (template)

Time [min]

# FIG. 12 (b)

Insulin concentration (template)

Time [min]

Blood glucose and insulin concentration (pre-replacement)

FIG. 13

EP 1 830 333 A1

38

**FIG. 14**

|  | BETA | H | ALPHA | Y0 | X0 | Kp | Kb | b1 |
|---|---|---|---|---|---|---|---|---|
| Pre-replacement | 0. 264 | 110. 1725 | 0. 71592 | 45. 32 | 10 | 5. 14E-05 | 0. 00494 | ··· |
| BETA replacement | 0. 39939 | 110. 1725 | 0. 71592 | 45. 32 | 10 | 5. 14E-05 | 0. 00494 | ··· |
| Kp replacement | 0. 264 | 110. 1725 | 0. 71592 | 45. 32 | 10 | 0. 000161 | 0. 00494 | ··· |
| Normal-type average | 0. 39939 | 83. 7383 | 0. 73796 | 2. 2 | 71. 5686 | 0. 000161 | 0. 01565 | ··· |
| Boundary-type average | 0. 44632 | 117. 7542 | 0. 51756 | 2. 2 | 109. 1171 | 0. 000103 | 0. 01089 | ··· |
| Diabetes-type average | 0. 12921 | 78. 6874 | 0. 12451 | 8. 129 | 49. 2497 | 4. 84E-05 | 0. 0111 | ··· |

BETA: Insulin secretion sensitivity

Kp: Peripheral insulin sensitivity

# FIG. 15

Blood glucose and insulin concentration (BETA replacement)

Insulin concentration [μU/ml]

Blood glucose level [mg/dl]

Time [min]

Legend:
- Blood glucose level (post-replacement)
- Blood glucose level (pre-replacement)
- Insulin concentration (post-replacement)
- Insulin concentration (pre-replacement)

Blood glucose and insulin concentration (Kp replacement)

FIG. 16

# FIG. 17

Kp 76%    BETA 24%

# FIG. 18

Blood glucose and insulin concentration (pre-replacement)

FIG. 19

**FIG. 20**

| | BETA | H | ALPHA | YO | XO | Kp | Kb | b1 |
|---|---|---|---|---|---|---|---|---|
| Pre-replacement | 0.060625 | 119.6085 | 0.68653 | 8.668 | 10 | 2.23E-04 | 0.0083 | ... |
| BETA replacement | 0.39939 | 119.6085 | 0.68653 | 8.668 | 10 | 2.23E-04 | 0.0083 | ... |
| Kp replacement | 0.060625 | 119.6085 | 0.68653 | 8.668 | 10 | 0.000161 | 0.0083 | ... |
| Normal-type average | 0.39939 | 83.7383 | 0.73796 | 2.2 | 71.5686 | 0.000161 | 0.01565 | ... |
| Boundary-type average | 0.44632 | 117.7542 | 0.51756 | 2.2 | 109.1171 | 0.000103 | 0.01089 | ... |
| Diabetes-type average | 0.12921 | 78.6874 | 0.12451 | 8.129 | 49.2497 | 4.84E-05 | 0.0111 | ... |

BETA: Insulin secretion sensitivity

Kp: Peripheral insulin sensitivity

Blood glucose and insulin concentration (BETA replacement)

FIG. 21

EP 1 830 333 A1

# FIG. 22

Blood glucose and insulin concentration (Kp replacement)

Insulin concentration [μU/ml]

Blood glucose level [mg/dl]

Time [min]

Legend:
- Blood glucose level (post-replacement)
- Blood glucose level (pre-replacement)
- Insulin concentration (post-replacement)
- Insulin concentration (pre-replacement)

# FIG. 23

Kp   0%

BETA
100%

# FIG. 24

Peripheral tissue insulin
concentration $I_3$

Post hepatic insulin SRpost

Blood insulin
concentration $I_1$

# FIG. 25

# FIG. 26

```
        ┌─────────────────┐
        │      START      │
        └─────────────────┘
                 │
                 ▼
   ┌──────────────────────────┐        S1
   │ Generate biological model│ ──────
   │   based on OGTT test     │
   │         results          │
   └──────────────────────────┘
                 │
                 ▼
   ┌──────────────────────────┐        S2
   │  Correct biological model│ ──────
   └──────────────────────────┘
                 │
                 ▼
   ┌──────────────────────────┐        S3
   │Execute simulated glucose │ ──────
   │          clamp           │
   └──────────────────────────┘
                 │
                 ▼
   ┌──────────────────────────┐        S4
   │  Output GIR estimated    │ ──────
   │          value           │
   └──────────────────────────┘
                 │
                 ▼
   ┌──────────────────────────┐        S5
   │ Output insulin resistance│ ──────
   └──────────────────────────┘
                 │
                 ▼
        ┌─────────────────┐
        │       END       │
        └─────────────────┘
```

# FIG. 27

# FIG. 28(a)

Blood glucose level (input)

Time[min]

# FIG. 28(b)

Insulin concentration (input)

Time [min]

# FIG. 29

Template database DBI

| Template | Parameter set |
|----------|---------------|
| T1 | PS#01 |
| T2 | PS#02 |
| T3 | PS#03 |
| ⋮ | ⋮ |

# FIG. 30(a)

Blood glucose level (template)

Time [min]

# FIG. 30(b)

Insulin concentration (template)

Time[min]

# FIG. 31(a)

Error (blood glucose)

Time[min]

# FIG. 31(b)

Error (insulin)

Time[min]

# FIG. 32

# FIG. 33

# FIG. 34

# FIG. 35

Glucose

Test subject

Insulin

Blood collection

# FIG. 36(a)

# FIG. 36(b)

# FIG. 37(a)

FIG. 37(b)

# FIG. 38(a)

# FIG. 38(b)

# FIG. 39(a)

# FIG. 39(b)

# FIG. 40(a)

# FIG. 40(b)

# FIG. 41(a)

# FIG. 41(b)

**European Patent Office**

**DECLARATION**

which under Rule 45 of the European Patent Convention shall be considered, for the purposes of subsequent proceedings, as the European search report

Application Number

EP 07 00 1599

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.<br>The problems which are addressed do not appear to require a technical, but rather an administrative/organisational, or business, solution. The implementation of this solution may include the use of generic technical features, however these do not interact to solve any overall technical problem but merely serve their well-known functions.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br>----- | INV.<br>G09B23/00 |

| Place of search | Date | Examiner |
|---|---|---|
| Munich | 23 July 2007 | Mennerun, Steeve |

EPO FORM 1504 (P04C37)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6421633 B

- US 5971922 A